(19) Europäisches Patentamt
European Patent Office
Office européen des brevets

(11) EP 4 593 129 A1

(12) **EUROPEAN PATENT APPLICATION**
published in accordance with Art. 153(4) EPC

(43) Date of publication:
**30.07.2025 Bulletin 2025/31**

(21) Application number: **23907010.5**

(22) Date of filing: **19.12.2023**

(51) International Patent Classification (IPC):
***H01M 8/1004*** *(2016.01)* ***H01M 4/92*** *(2006.01)*
***H01M 8/04302*** *(2016.01)* ***H01M 8/04303*** *(2016.01)*
***H01M 8/04828*** *(2016.01)* ***H01M 8/10*** *(2016.01)*
***H01M 8/1025*** *(2016.01)* ***H01M 8/1058*** *(2016.01)*
***H01M 8/1067*** *(2016.01)*

(52) Cooperative Patent Classification (CPC):
**H01M 4/92; H01M 8/04302; H01M 8/04303; H01M 8/04828; H01M 8/10; H01M 8/1004; H01M 8/1025; H01M 8/1058; H01M 8/1067**

(86) International application number:
**PCT/JP2023/045415**

(87) International publication number:
**WO 2024/135650 (27.06.2024 Gazette 2024/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.12.2022 JP 2022204057**

(71) Applicant: **Toray Industries, Inc.**
**Tokyo 103-8666 (JP)**

(72) Inventors:
- **UMEDA, Hiroaki**
  **63755 Alzenau (DE)**
- **INOUE, Tatsuhiro**
  **63755 Alzenau (DE)**
- **GEHRIG, Dominik**
  **63755 Alzenau (DE)**

(74) Representative: **Hoefer & Partner Patentanwälte mbB**
**Pilgersheimer Straße 20**
**81543 München (DE)**

(54) **ELECTROLYTE MEMBRANE WITH CATALYST LAYER, MEMBRANE ELECTRODE ASSEMBLY, FUEL CELL, AND METHOD FOR OPERATING FUEL CELL**

(57) The present invention provides a catalyst coated membrane capable of inhibiting a decrease in the output of a fuel cell, and simultaneously decreasing the production cost. The present invention is a catalyst coated membrane including: an electrolyte membrane; a cathode catalyst layer arranged on one surface of the electrolyte membrane; and an anode catalyst layer arranged on the other surface of the electrolyte membrane, wherein the cathode catalyst layer and the anode catalyst layer each contain platinum; the permeability ratio $TR_{50}$ ($TH_{50}/TO_{50}$) of the hydrogen permeability ($TH_{50}$) to the oxygen permeability ($TO_{50}$) of said electrolyte membrane at 65°C and 50% RH is 3.0 or more; and the catalyst coated membrane satisfies the following condition 1 and/or condition 2. <condition 1> the ratio (CPt/APt) of the amount of platinum per unit area (CPt) of said cathode catalyst layer to the amount of platinum per unit area (APt) of said anode catalyst layer is 2.0 or more; <condition 2> the ratio (TAn/TCa) of the thickness (TAn) of said anode catalyst layer to the thickness (TCa) of said cathode catalyst layer is less than 0.40.

10

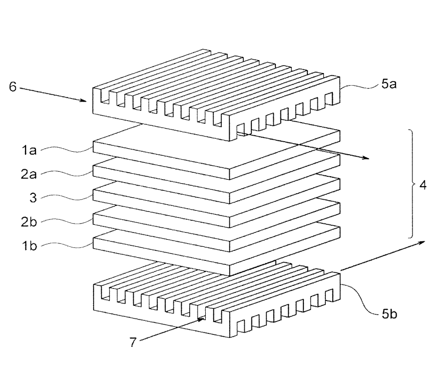


Fig.1

EP 4 593 129 A1

## Description

TECHNICAL FIELD

The present invention relates to a catalyst coated membrane, a membrane electrode assembly, a fuel cell, and a method of operating a fuel cell.

BACKGROUND ART

A catalyst coated membrane (CCM) in which a catalyst layer is arranged on each of both surfaces of an electrolyte membrane is used for a fuel cell, water electrolysis apparatus, hydrogen compressing apparatus, and the like. The catalyst layer commonly contains platinum as a catalytic metal.

In a fuel cell, the amount of platinum contained in a catalyst layer has a positive correlation with the output (generated power voltage) and with the durability. For example, a necessary output and a durability time are set in accordance with the use and specification of a fuel cell, and the amount of platinum is adjusted in accordance with the requirements. In addition, an attempt has been made to decrease the amount of usage of costly platinum (to decrease platinum) in recent years.

On the other hand, it is known that platinum in a catalyst layer is eluted out during operation of a fuel cell, and that part of the platinum is precipitated (forms a platinum band) in an electrolyte membrane. The precipitation of platinum in the electrolyte membrane means a decrease in the amount of platinum in the catalyst layer, and is responsible for a decrease in the output. Against this problem, a solution to arrange between the electrolyte membrane and the catalyst layer, a layer (a platinum trapping layer) for trapping the platinum ion eluted, is proposed (for example, see Patent Literature 1 to 4).

PRIOR ART DOCUMENT

PATENT LITERATURE

Patent Literature 1: JP2009-37956A
Patent Literature 2: JP2013-243058A
Patent Literature 3: JP2015-69926A
Patent Literature 4: JP2015-228292A

SUMMARY OF THE INVENTION

PROBLEMS TO BE SOLVED BY THE INVENTION

Providing such a platinum trapping layer as described in the above Patent Literatures is disadvantageous from the viewpoint of production cost, and decreases the power generation performance in some cases. Thus, the precipitation of platinum in an electrolyte membrane has been an obstacle in attaining a decrease in platinum in the catalyst layer.

In view of this, an object of the present invention is to provide a catalyst coated membrane capable of inhibiting a decrease in the output of a fuel cell, and simultaneously decreasing the production cost.

MEANS FOR SOLVING THE PROBLEMS

The present inventors have come to complete the present invention through the discovery that the problem of precipitation of platinum in an electrolyte membrane arises from the relationship between the hydrogen permeability and oxygen permeability of the electrolyte membrane, and furthermore is associated with the ratio of amounts of platinum and the ratio of catalyst-layer thicknesses respectively between a cathode and an anode.

That is, the present invention is a catalyst coated membrane including: an electrolyte membrane; a cathode catalyst layer arranged on one surface of the electrolyte membrane; and an anode catalyst layer arranged on the other surface of the electrolyte membrane; wherein the cathode catalyst layer and the anode catalyst layer each contain platinum; wherein the permeability ratio $TR_{50}$ ($TH_{50}/TO_{50}$) of the hydrogen permeability ($TH_{50}$) to the oxygen permeability ($TO_{50}$) of the electrolyte membrane at 65°C and 50% RH is 3.0 or more; and the catalyst coated membrane satisfies the following condition 1 or condition 2.

<condition 1>

the ratio (CPt/APt) of the amount of platinum per unit area (CPt) in the cathode catalyst layer to the amount of platinum per unit area (APt) in the anode catalyst layer is 2.0 or more
<condition 2>
the ratio (TAn/TCa) of the thickness (TAn) of the anode catalyst layer to the thickness (TCa) of the cathode catalyst layer is less than 0.40

In addition, the present invention is a membrane electrode assembly including: the catalyst coated membrane according to the above-described present invention; and a gas diffusion layer arranged on each of both surfaces of the catalyst coated membrane.

In addition, the present invention is a fuel cell including a plurality of cells each containing the membrane electrode assembly according to the above-described present invention, wherein said plurality of cells are stacked.

Furthermore, the present invention is a method of operating the fuel cell according to the above-described present invention, wherein the relative humidity in the cell is controlled so as to be 50% or less at the starting and the stopping of the fuel cell.

EFFECT OF THE INVENTION

The present invention can provide a catalyst coated membrane capable of inhibiting a decrease in the output of a fuel cell, and simultaneously decreasing the production cost.

BRIEF DESCRIPTION OF DRAWINGS

FIG. 1 is a perspective view for describing the structure of a fuel cell.

MODE FOR CARRYING OUT THE INVENTION

Embodiments of the present invention will now be described in detail. The present invention is not limited to the below-described embodiments, and can be performed with various modifications in accordance with the purpose or usage.

[Catalyst Coated Membrane]

A catalyst coated membrane according to an embodiment of the present invention includes a cathode catalyst layer arranged on one surface of an electrolyte membrane and an anode catalyst layer arranged on the other surface. The cathode catalyst layer and the anode catalyst layer each contain platinum. That is, the catalyst coated membrane according to the present invention includes: a platinum-containing cathode catalyst layer arranged on one surface of the electrolyte membrane; and a platinum-containing anode catalyst layer arranged on the other surface of the electrolyte membrane. The permeability ratio $TR_{50}$ ($TH_{50}/TO_{50}$) of the hydrogen permeability ($TH_{50}$) to the oxygen permeability ($TO_{50}$) of the electrolyte membrane at 65°C and 50% RH is 3.0 or more, and the catalyst coated membrane satisfies the following condition 1 and/or condition 2.

<condition 1>
The ratio (CPt/APt) of the amount of platinum per unit area (CPt) in the cathode catalyst layer to the amount of platinum per unit area (APt) in the anode catalyst layer is 2.0 or more; and
<condition 2>
The ratio (TAn/TCa) of the thickness (TAn) of the anode catalyst layer to the thickness (TCa) of the cathode catalyst layer is less than 0.40.

Hereinafter, in some cases, an embodiment that satisfies the condition 1 is referred to as a first embodiment, and an embodiment that satisfies the condition 2 is referred to as a second embodiment. In addition, a catalyst coated membrane according to an embodiment of the present invention may satisfy the condition 1 and the condition 2 simultaneously.

[First Embodiment]

The first embodiment of the present invention is characterized by including: a platinum-containing cathode catalyst layer arranged on one surface of an electrolyte membrane; and a platinum-containing anode catalyst layer arranged on the other surface, wherein the permeability ratio $TR_{50}$ ($TH_{50}/TO_{50}$) of the hydrogen permeability ($TH_{50}$) to the

oxygen permeability ($TO_{50}$) of the electrolyte membrane at 65°C and 50% RH is 3.0 or more, and the ratio (CPt/APt) of the amount of platinum per unit area (CPt) in the cathode catalyst layer to the amount of platinum per unit area (APt) in the anode catalyst layer is 2.0 or more. It has been discovered that combining such catalyst layers and an electrolyte membrane results in inhibiting platinum in the electrolyte membrane from being precipitated. Thus, a decrease in the output is inhibited, and a decrease in platinum become possible. The above-described mechanism is not clear, but is presumed to be as follows.

The cathode (air electrode) in a fuel cell has a higher potential than an anode (hydrogen electrode) owing to the chemical potential of oxygen, thus presenting an environment in which the platinum contained in the cathode catalyst layer is oxidized to become a platinum ion which is prone to be eluted. In addition, it is known that, in the processes of starting and the stopping, air leaks into the anode to form a dual cell, a high-potential load of about 1.5 V is applied to the cathode, and at this electrical potential, the elution of platinum at the cathode is further accelerated. In this regard, the processes of starting and stopping refer to a process of starting a fuel cell and a process of stopping the operation. Hereinafter, "the processes of starting and stopping" are referred to as "the starting/stopping processes".

It is conventionally considered that platinum is precipitated in an electrolyte membrane because hydrogen gas supplied to the anode crosses over to the electrolyte membrane and the platinum ion is reduced in the electrolyte membrane. However, the present inventors have set up the hypothesis that oxygen gas permeating the electrolyte membrane also participates in the precipitation of platinum in the electrolyte membrane, and have obtained a result that endorses the hypothesis. That is, it is presumed that oxygen gas stabilizes the platinum ion eluted and promotes the invasion of the platinum ion into the inner part of the electrolyte membrane, which promotes the precipitation of platinum in the electrolyte membrane. On the other hand, it is known that, in the presence of a platinum catalyst, hydrogen gas and oxygen gas react to generate water. Sufficiently increasing the ratio of the hydrogen gas permeability to the oxygen gas permeability allows the surplus oxygen gas to be consumed by the above-described reaction. It is considered that this causes the reduction of the platinum ion by the hydrogen gas to become predominant in the catalyst layer, thus inhibiting the platinum from being lost from the catalyst layer.

That is, achieving relatively small permeation of oxygen gas and relatively large permeation of hydrogen gas in the electrolyte membrane can inhibit platinum loss from the catalyst layer. Specifically, the platinum loss from the catalyst layer can be inhibited by setting the permeability ratio $TR_{50}$ ($TH_{50}/TO_{50}$) of the hydrogen permeability ($TH_{50}$) to the oxygen permeability ($TO_{50}$) of the electrolyte membrane at 65°C and 50% RH to 3.0 or more. Losing platinum from the catalyst layer causes a decrease in the function of the catalyst to causes catalyst deterioration, but the first embodiment can inhibit the deterioration.

Furthermore, the elution of platinum from the cathode and the precipitation of platinum in the inner part of the electrolyte membrane can be inhibited, and a decrease in the output of the fuel cell can be inhibited by setting the ratio (CPt/APt) of the amount of platinum per unit area (CPt) in the cathode catalyst layer to the amount of platinum per unit area (APt) in the anode catalyst layer to 2.0 or more. This mechanism is not clear, but is presumed to be as follows.

It is presumed that an output decrease accompanying the catalyst deterioration in the cathode in the starting/-stopping processes is due to an oxygen reduction reaction in the anode caused locally by leakage of air into the anode, and results from formation of dual cell. It is considered that this oxygen reduction reaction in the anode can be inhibited by decreasing the amount of platinum in the anode, and as a result, the catalyst deterioration in the cathode is inhibited.

On the other hand, too much decreasing the amount of the catalyst in the anode induces insufficiency of hydrogen oxidation reaction in the anode, elution of a platinum catalyst in the electrical potential cycle of the anode, insufficiency of resistance to impurities, such as carbon monoxide, and the like. These cause a decrease in the output in some cases. In addition, increasing the amount of the catalyst in the cathode is also effective in inhibiting the decrease in the output accompanying the starting and stopping. However, since it involves high cost, a balance between the output and the durability is important. In the present invention, both the output and the durability can be satisfied while suppressing production cost by using a catalyst coated membrane which combines the catalyst layers having a specific ratio of the amount of a cathode catalyst and the amount of an anode catalyst; and an electrolyte membrane having a specific gas permeability.

From the above-described viewpoints, (CPt/APt) is preferably 2.2 or more, more preferably 2.4 or more, still more preferably 2.5 or more, particularly preferably 2.7 or more. In addition, (CPt/APt) is preferably less than 23.0, more preferably less than 19.0, still more preferably less than 15.0, particularly preferably less than 12.0.

The decrease in platinum can be easily achieved by inhibiting the precipitation of platinum in the inner part of the electrolyte membrane. That is, a catalyst coated membrane according to the first embodiment can maintain a relatively high output even if the total of CPt and APt is 1.8 $mg/cm^2$ or less. The lower limit of the total of CPt and APt is not particularly limited, but is preferably 0.2 $mg/cm^2$ or more. Hereinafter, the total of CPt and APt is referred to as the "Pt total" in some cases. That is, the Pt total in the first embodiment is preferably 0.2 $mg/cm^2$ or more and 1.8 $mg/cm^2$ or less. The Pt total is more preferably 0.2 $mg/cm^2$ or more and 1.5 $mg/cm^2$ or less, still more preferably, 0.2 $mg/cm^2$ or more and 1.3 $mg/cm^2$ or less, particularly preferably 0.2 $mg/cm^2$ or more and 1.1 $mg/cm^2$ or less.

CPt is preferably 0.15 $mg/cm^2$ or more, more preferably 0.2 $mg/cm^2$ or more, particularly preferably 0.25 $mg/cm^2$

or more, from the viewpoints of achieving a relatively high output by decreasing the oxygen reduction overvoltage of the cathode, and of inhibiting a decrease in the output caused by catalyst poisoning due to impurities. On the other hand, CPt is preferably 1.5 mg/cm$^2$ or less, more preferably 1.3 mg/cm$^2$ or less, still more preferably 1.0 mg/cm$^2$ or less, particularly preferably 0.9 mg/cm$^2$ or less, from the viewpoints of cost reduction by decreasing platinum, the processability in the formation of the catalyst layer, and the quality of the catalyst layer.

APt is preferably 0.03 mg/cm$^2$ or more, more preferably 0.04 mg/cm$^2$ or more, particularly preferably 0.05 mg/cm$^2$ or more, from the viewpoints of achieving a relatively high output by decreasing the hydrogen oxidation overvoltage of the anode, and of inhibiting a decrease in the output caused by catalyst poisoning due to impurities, such as carbon monoxide. On the other hand, CPt is preferably 0.3 mg/cm$^2$ or less, more preferably 0.25 mg/cm$^2$ or less, particularly preferably 0.2 mg/cm$^2$ or less, from the viewpoint of cost reduction by decreasing platinum.

In the catalyst coated membrane according to the first embodiment, the Pt total is preferably set suitably in accordance with the application and specification of a fuel cell. The Pt total can be set in the range of more than 0.5 mg/cm$^2$ and 1.8 mg/cm$^2$ or less, for example, in an application, such as a fuel cell for a truck, in which the frequency of use in the region of a high output is relatively high, and high durability is required. Hereinafter, the embodiment in the range of the Pt total of more than 0.5 mg/cm$^2$ and 1.8 mg/cm$^2$ or less is referred to as a "first-1 embodiment". The upper value of the Pt total in the first-1 embodiment is preferably 1.5 mg/cm$^2$ or less, more preferably 1.3 mg/cm$^2$ or less, particularly preferably 1.1 mg/cm$^2$ or less.

In addition, the Pt total can be set in the range of 0.2 mg/cm$^2$ or more and 0.5 mg/cm$^2$ or less, for example, in the case of an application, such as a fuel cell for a passenger car or a forklift, in which the frequency of use in the region of a low output is relatively high. Hereinafter, the embodiment in the range of the Pt total of 0.2 mg/cm$^2$ or more and 0.5 mg/cm$^2$ or less is referred to as a "first-2 embodiment".

That is, using a catalyst coated membrane according to the first embodiment for a fuel cell makes it possible to maintain a relatively high output for a long period of time in the first-1 embodiment, and in addition, makes it possible to inhibit a decrease in the output in the starting/stopping processes in the first-2 embodiment, which can achieve a further decrease in platinum.

In the first-1 embodiment, the ratio (CPt/APt) of the amount of platinum per unit area (CPt) in the cathode catalyst layer to the amount of platinum per unit area (APt) in the anode catalyst layer is preferably 3.0 or more, more preferably 4.0 or more, particularly preferably 5.0 or more, from the viewpoints of maintaining a relatively high output for a long period of time, and of decreasing production cost. In addition, the ratio (CPt/APt) is preferably less than 23.0, more preferably less than 19.0, still more preferably less than 15.0, particularly preferably less than 12.0.

In the first-2 embodiment, the ratio (CPt/APt) is preferably 2.0 or more, more preferably 2.5 or more, still more preferably 3.0 or more, particularly preferably 4.0 or more, from the viewpoint of inhibiting a decrease in the output and decreasing further production cost while decreasing platinum. In addition, the ratio (CPt/APt) is preferably less than 11.0, more preferably less than 10.0, still more preferably less than 9.0, particularly preferably less than 7.0.

With regard to the thickness of the catalyst layer, the thickness of the cathode catalyst layer is preferably in the range of from 0.5 to 30 μm, more preferably in the range of from 1 to 25 μm, particularly preferably in the range of from 3 to 20 μm. The thickness of the anode catalyst layer is preferably in the range of from 0.2 to 20 μm, more preferably in the range of from 0.5 to 15μm, particularly preferably in the range of from 1 to 10 μm.

[Second Embodiment]

The second embodiment of the present invention is characterized by including: a platinum-containing cathode catalyst layer arranged on one surface of an electrolyte membrane; and a platinum-containing anode catalyst layer arranged on the other surface, wherein the permeability ratio $TR_{50}$ ($TH_{50}/TO_{50}$) of the hydrogen permeability ($TH_{50}$) to the oxygen permeability ($TO_{50}$) of the electrolyte membrane at 65°C and 50% RH is 3.0 or more, and the ratio (TAn/TCa) of the thickness (TAn) of the anode catalyst layer to the thickness (TCa) of the cathode catalyst layer is less than 0.40. It has been discovered that combining such catalyst layers and an electrolyte membrane can inhibit oxidation and elution of platinum in a cathode catalyst layer, and inhibit precipitation of platinum in an electrolyte membrane. Thus, a decrease in the output is inhibited, and a decrease in platinum become possible. The above-described mechanism is not clear, but is presumed to be as follows.

While a fuel cell is operated, water is generated by the reductive reaction of oxygen in the cathode. It is considered that this water generated causes oxidation and elution of platinum catalyst easily in the cathode. With respect to this phenomenon, it has been conceived that it is effective in diffusing the water generated in the cathode back to the anode, thereby decreasing the amount of the generated water which is retained in the cathode. That is, it is considered that by setting the ratio (TAn/TCa) of the thickness (TAn) of the anode catalyst layer to the thickness (TCa) of the cathode catalyst layer to less than 0.40, a concentration gradient of water is caused between the cathode and the anode, and the generated water moves easily from the cathode to the anode. Furthermore, it is considered that by combining such catalyst layers with an electrolyte membrane having the permeability ratio $TR_{50}$ ($TH_{50}/TO_{50}$) of the hydrogen permeability ($TH_{50}$) to the

oxygen permeability ($TO_{50}$) at 65°C and 50% RH of 3.0 or more, the precipitation of platinum in the electrolyte membrane and the loss of the platinum catalyst from the cathode catalyst layer can be inhibited effectively. This mechanism is as described above.

From the viewpoint of promoting the back diffusion of the generated water from the cathode to the anode, the ratio (TAn/TCa) is preferably less than 0.35, more preferably less than 0.30, particularly preferably less than 0.27. In addition, from the viewpoint of durability, the ratio (TAn/TCa) is preferably 0.03 or more, more preferably 0.05 or more, still more preferably 0.08 or more, particularly preferably 0.10 or more.

From the above-described viewpoint, the thickness (TCa) of the cathode catalyst layer is preferably relatively large; specifically, preferably 8 μm or more, more preferably 9 μm or more, particularly preferably 10 μm or more. On the other hand, in some cases, too large TCa results in decreasing the gas diffusibility and increasing the ohmic resistance to decrease the output. Thus, the thickness is preferably less than 20 μm, more preferably less than 19 μm, still more preferably less than 18 μm, particularly preferably less than 17 μm.

On the other hand, the thickness (TAn) of the anode catalyst layer is preferably relatively small; specifically, preferably less than 5 μm, more preferably less than 4 μm, still more preferably less than 3 μm, particularly preferably less than 2.7 μm. In some of the cases where TAn is too small, the output decreases, and the generated water permeating and moving from the cathode to the anode occludes part of the pores of the anode catalyst layer, causing a side reaction due to hydrogen deficit. Thus, the thickness is preferably 0.3 μm or more, more preferably 0.5 μm or more, particularly preferably 0.7 μm or more.

For the amounts of platinum per unit area in the cathode catalyst layer and the anode catalyst layer and the total of these amounts of platinum, the preferable ranges of "CPt", "APt", and the "Pt total" in the first embodiment can be used as the preferable ranges in the second embodiment.

In addition, a catalyst coated membrane according to the second embodiment can be expected to contribute to enhancing the power generation performance of a fuel cell. One example of obstructive factors in enhancement of the power generation performance is a decrease in the diffusibility of gas (oxygen or air), which decrease is caused by water generated during operation in the cathode and retained in the cathode. The retention of water in the cathode is inhibited by promoting the movement of water from the cathode to the anode. For this purpose, as described above, it is effective to generate a concentration gradient of water between the cathode and the anode. A large difference in thickness between the cathode catalyst layer and the anode catalyst layer can generate a concentration gradient of water easily. That is, by setting the ratio of thickness (TAn/TCa) between the cathode catalyst layer and the anode catalyst layer to less than 0.40, the movement of water from the cathode to the anode is promoted, and the enhancement of the power generation performance is expected.

In addition, to promote the movement of water from the cathode to the anode, it is effective to make the thickness of the electrolyte membrane relatively small. Specifically, the thickness of the electrolyte membrane is preferably 15 μm or less, more preferably less than 13 μm, particularly preferably less than 10 μm. For example, an electrolyte membrane having a water vapor permeability of $1.5 \times 10^{-5}$ $cm^3 \cdot cm/(cm^2 \cdot cmHg \cdot s)$ or less tends to allow the movement of water to be small, as described below. In cases where such an electrolyte membrane is used, it is preferable to reduce the membrane thickness, as described above. On the other hand, the membrane thickness is preferably 3 μm or more, more preferably 4 μm or more, particularly preferably 5 μm or more, from the viewpoint of securing the durability of the electrolyte membrane.

It has been revealed that a catalyst coated membrane according to the second embodiment has suitable ranges further in the relationship between the thickness (TM) of the electrolyte membrane and the thickness (TCa) of the cathode catalyst layer, and in the relationship between the thickness (TM) of the electrolyte membrane and the thickness (TAn) of the anode catalyst layer, from the viewpoints of attaining all of enhancement of the power generation performance (output), inhibition of oxidation and elution of the cathode catalyst, inhibition of invasion of a platinum ion into the electrolyte membrane, and inhibition of precipitation of platinum in the electrolyte membrane. That is, TCa/TM is preferably 0.60 or more, and in addition, TAn/TM is preferably 0.50 or less.

TCa/TM is more preferably 0.70 or more, still more preferably 0.90 or more, particularly preferably 1.00 or more. In addition, TCa/TM is preferably 5.0 or less, more preferably 4.0 or less, particularly preferably 3.0 or less.

TAn/TM is more preferably 0.40 or less, still more preferably 0.35 or less, particularly preferably 0.30 or less. In addition, TAn/TM is preferably 0.05 or more, more preferably 0.08 or more, particularly preferably 0.10 or more.

[Combination of First Embodiment and Second Embodiment]

A catalyst coated membrane according to an embodiment of the present invention may be in the form of a combination of a technical matter according to the first embodiment and a technical matter according to the second embodiment.

For example, the first embodiment can be combined with a technical matter(s) according to the second embodiment appropriately, for example, the ratio (TAn/TCa), TAn, TCa, the ratio (TAn/TM), and/or the ratio (TCa/TM). In addition, the second embodiment can be combined with a technical matter(s) according to the first embodiment

appropriately, for example, the ratio (CPt/APt), the Pt total, CPt, and/or APt. The first-1 embodiment and the first-2 embodiment can each be combined with the second embodiment. That is, by combining a preferable range of each of the ratio (CPt/APt), the Pt total, CPt, and APt in the first-1 embodiment or the first-2 embodiment with a preferable range of each of the ratio (TAn/TCa), TAn, TCa, the ratio (TAn/TM), and the ratio (TCa/TM) in the second embodiment, it possible to inhibit the precipitation of platinum in the electrolyte membrane and achieve the effects of the present invention. In particular, the first-2 embodiment and the second embodiment are preferably combined.

[Catalyst Layer]

Hereinafter, the cathode catalyst layer and the anode catalyst layer are referred to collectively as a "catalyst layer", and matters common between the cathode catalyst layer and the anode catalyst layer in the above-described first embodiment and second embodiment will be described together. The expressions, "cathode catalyst layer" and "anode catalyst layer", are common to the first embodiment and the second embodiment respectively, unless otherwise specified. A catalyst layer in the present invention contains platinum as a catalyst. The platinum may be used alone, or may be used in combination with another catalytic metal, for example, ruthenium, rhodium, palladium, osmium, iridium, iron, lead, gold, silver, copper, chromium, cobalt, nickel, manganese, vanadium, molybdenum, gallium, and aluminium. Examples of the form of the above-described combination include: an alloy of platinum and another catalytic metal; and a core-shell type of catalyst. Examples of the alloy include a platinum-ruthenium alloy, platinum-cobalt alloy, platinum-palladium alloy, platinum-nickel alloy, and platinum-cobalt-manganese alloy. Examples of the core-shell type include a platinum-palladium catalyst and a platinum-gold catalyst.

The larger the surface area of a platinum catalyst in a catalyst layer is, the higher the output is. Thus, increasing the surface area of the platinum catalyst is effective in decreasing platinum. From this viewpoint, at least the average particle size of platinum particles in the cathode catalyst layer is preferably smaller. On the other hand, the smaller the platinum particles are, the more easily the platinum particles elute, which is responsible for the precipitation of platinum in the inner part of the electrolyte membrane as described above. However, a catalyst coated membrane according to an embodiment of the present invention can inhibit precipitation of platinum in the inner part of the electrolyte membrane, which enables use of the platinum particles having a small average particle size, thereby achieving both a high output and durability.

From the above-described viewpoint, the average particle size of platinum particles is preferably 8 nm or less, more preferably 6 nm or less, particularly preferably 5 nm or less. On the other hand, the average particle size is preferably 1 nm or more, more preferably 2 nm or more, particularly preferably 3 nm or more, from the viewpoint of enhancing the durability.

The platinum particles are preferably supported on carbon particles from the viewpoint of electrical conductivity. That is, the platinum particles are preferably used as platinum-supporting carbon particles. Examples of the carbon particles include particles of solid carbon, such as furnace black or acetylene black; microporous carbon, such as ketjen black; mesoporous carbon; and crystallized carbon resulting from crystallization by heat treatment. In particular, as supporting carbon in the cathode catalyst layer, solid carbon or mesoporous carbon is preferable from the viewpoints of decreasing the mass transfer resistance in a high-current-density region, and enhancing the output.

The BET specific surface area of the platinum-supporting carbon particles in the cathode catalyst layer is preferably 50 to 900 $m^2/g$, still more preferably 85 to 600 $m^2/g$, from the viewpoints of dispersing platinum uniformly on carbon particles, increasing the effective surface-area amount of platinum, and achieving both the performance and durability.

On the other hand, the BET specific surface area of the platinum-supporting carbon particles in the anode catalyst layer is preferably 250 $m^2/g$ or less, still more preferably 200 $m^2/g$ or less, most preferably 150 $m^2/g$ or less, from the viewpoint of decreasing the high-potential stress applied to the cathode during the starting/stopping processes. The BET specific surface area is preferably 50 $m^2/g$ or more, more preferably 60 $m^2/g$ or more, still more preferably 70 $m^2/g$ or more, from the viewpoint of performance.

The ratio of supporting platinum of the platinum-supporting carbon particles in the catalyst layer is suitably adjusted in accordance with a target design, for example, a platinum-loading amount ($mg/cm^2$) or the thickness of the catalyst layer. The ratio of supporting platinum in the cathode catalyst layer is, for example, preferably 25 to 65 mass%, more preferably 40 to 60 mass%, particularly preferably 50 to 60 mass%, from the viewpoints of inhibiting the agglomeration of platinum and utilizing fuel cell reaction effectively. The ratio of supporting platinum in the anode catalyst layer is, for example, preferably 20 to 60 mass%, more preferably 32 mass% or more and 58 mass% or less, from the viewpoints of the stability of production processes of the catalyst layer and the quality of the catalyst layer. Here, the ratio of supporting platinum is the ratio of the mass of platinum to the mass of platinum-supporting carbon particles.

The catalyst layer preferably contains a polymer electrolyte. As the polymer electrolyte, for example, the below-described fluorine polymer electrolyte or hydrocarbon polymer electrolyte can be used. Among these, a fluorine polymer electrolyte is preferable, and a perfluorocarbonsulfonic acid polymer is more preferable, from the viewpoints of gas

diffusibility and chemical durability. The amount of the polymer electrolyte contained in the catalyst layer is preferably 30 mass% or more, more preferably 50 mass% or more, still more preferably 60 mass% or more, particularly preferably 70 mass% or more, with respect to 100 mass% platinum. In addition, the amount is preferably 350 mass% or less, more preferably 250 mass% or less, particularly preferably 150 mass% or less.

In cases where platinum-supporting carbon particles are used, the ratio (I/C) of the mass (I) of a polymer electrolyte to the mass (C) of carbon particles is preferably in the range of from 0.6 to 1.4, more preferably in the range of from 0.7 to 1.3, particularly preferably in the range of from 0.8 to 1.2.

Each of the cathode catalyst layer and the anode catalyst layer preferably contains platinum-supporting carbon particles as a catalyst. Here, the product (YCa) of (D) and (B) in the cathode catalyst layer is preferably relatively large, wherein (D) ($mg/cm^2$) represents the mass per unit area of the platinum-supporting carbon particles, and (B) ($m^2/g$) represents the BET specific surface area of the platinum-supporting carbon particles. In addition, the product (YAn) of (D) and (B) in the anode catalyst layer is preferably relatively small. Such a constitution makes it possible to expect enhancement of the power generation performance.

The BET specific surface area (B) of the platinum-supporting carbon particles can be determined using a method described in Examples below. In addition, the mass per unit area (D) of the platinum-supporting carbon particles can be determined by dividing the amount of platinum ($mg/cm^2$) by the ratio of supporting platinum (E (%)) of the platinum-supporting carbon particles. That is, D for the cathode catalyst layer and D for the anode catalyst layer can be determined in accordance with (CPt) / (E/100) and (APt) / (E/100) respectively. The larger the product of (D) and (B) is, the larger the void volume of the catalyst layer is. On the other hand, the smaller the product (D) and (B) is, the smaller the void volume of the catalyst layer is.

Making (YCa) relatively large and making (YAn) relatively small can generate a concentration gradient of water between the cathode and the anode, thereby expecting enhancement of the power generation performance.

From the above-described viewpoint, (YCa) is preferably 70 or more, more preferably 100 or more, still more preferably 150 or more, particularly preferably 200 or more. The upper limit is preferably 500 or less. (YAn) is preferably 50 or less, more preferably 30 or less, still more preferably 20 or less, particularly preferably 15 or less.

Furthermore, the difference (YCa - YAn) between (YCa) and (YAn) is preferably larger from the viewpoint of enhancement of the power generation performance. Specifically, (YCa - YAn) is preferably 40 or more, more preferably 60 or more, still more preferably 80 or more, particularly preferably 100 or more.

[Electrolyte Membrane]

Below, an electrolyte membrane in the above-described first embodiment and second embodiment will be described.

The electrolyte membrane in the present invention has the permeability ratio $TR_{50}$ ($TH_{50}/TO_{50}$) of the hydrogen permeability ($TH_{50}$) to the oxygen permeability ($TO_{50}$) at 65°C and 50% RH of 3.0 or more. From the viewpoint of inhibiting platinum loss from the catalyst layer in the starting/stopping processes, the permeability ratio $TR_{50}$ is preferably 4.0 or more, more preferably 5.0 or more, still more preferably 6.0 or more, particularly preferably 8.0 or more. In addition, the permeability ratio $TR_{50}$ is preferably 30.0 or less, more preferably 20.0 or less, particularly preferably 15.0 or less, from the viewpoint of current efficiency.

The permeability ratio $TR_{50}$ of the electrolyte membrane can be controlled by adjusting the kind (chemical structure), molecular weight, ion exchange capacity, crystallinity, phase-separation structure, and the like of a polymer electrolyte constituting the electrolyte membrane.

As a polymer electrolyte, a known polymer electrolyte, such as a fluorine polymer electrolyte or a hydrocarbon polymer electrolyte, can be used alone or in combination.

The fluorine polymer electrolyte is a fluorine polymer having an ionic group. The fluorine polymer means a polymer in which most or all of the hydrogen of an alkyl group and/or an alkylene group in the molecule are replaced with a fluorine atom(s).

Examples of the fluorine polymer electrolyte include a perfluorocarbonsulfonic acid polymer, perfluorocarbonphosphonic acid polymer, trifluorostyrenesulfonic acid polymer, trifluorostyrenephosphonic acid polymer, ethylenetetrafluoroethylene-g-styrenesulfonic acid polymer, ethylene-tetrafluoroethylene copolymer, and polyvinylidene fluoride-perfluorocarbonsulfonic acid polymer.

Typical examples of the fluorine polymer electrolyte include commercially available products, such as "Nafion" (registered trademark) (manufactured by The Chemours Company), "FLEMION" (registered trademark) (manufactured by AGC Inc.), and "ACIPLEX" (registered trademark) (manufactured by Asahi Kasei Corporation).

The hydrocarbon polymer electrolyte is an ionic group-containing hydrocarbon polymer. The hydrocarbon polymer means a polymer having a main chain containing a hydrocarbon as a main constituent unit.

Examples of the hydrocarbon polymer electrolyte include an aromatic hydrocarbon polymer having an aromatic ring in the main chain. The aromatic ring may include not only a hydrocarbon aromatic ring but also a hetero ring. In

addition, the hydrocarbon polymer electrolyte may partly contain an aliphatic unit together with an aromatic ring unit.

Specific examples of the aromatic hydrocarbon polymer include polymers having, together with an aromatic ring, in the main chain, a structure selected from polysulfone, polyether sulfone, polyphenylene oxide, a polyarylene ether, polyphenylene sulfide, polyphenylene sulfide sulfone, polyparaphenylene, a polyarylene polymer, polyarylene ketone, polyether ketone, polyarylene phosphine oxide, polyether phosphine oxide, polybenzoxazole, polybenzothiazole, polybenzimidazole, polyamide, polyimide, polyetherimide, and polyimide sulfone.

In this regard, the polysulfone is a generic term for a structure having a sulfone bond in the molecular chain, the polyether sulfone is a generic term for a structure having an ether bond and a sulfone bond in the molecular chain, and the polyether ketone is a generic term for a structure having an ether bond and a ketone bond in the molecular chain. The aromatic hydrocarbon polymer may have a plurality of structures among these structures.

The ionic group may be an ionic group having any one of a cation exchange ability and an anion exchange ability. Examples of such a functional group include a sulfonic group, sulfonimide group, sulfate group, phosphonic group, phosphate group, carboxylic group, ammonium group, phosphonium group, and amino group. The polymer may contain two or more kinds of the ionic groups.

A hydrocarbon polymer electrolyte is preferably used as a polymer electrolyte from the viewpoint of controlling the permeability ratio $TR_{50}$ of the electrolyte membrane to 3.0 or more. The controlling can be relatively easily performed by adjusting the molecular weight, ion exchange capacity, crystallinity, phase-separation structure, and the like of the hydrocarbon polymer electrolyte.

For example, such an adjustment is easily made using one or a combination of the following conditions: (i) having a weight-average molecular weight in the range of from 17 0,000 to 1,000,000; (ii) having an ion exchange capacity in the range of from 1.8 to 3.1 meq/g; (iii) having crystallinity; and (iv) having a phase-separation structure.

The ion exchange capacity (IEC) refers to the molar amount of ionic groups introduced per unit dry weight of the polymer electrolyte. The larger the value of the IEC is, the larger the amount of the introduced ionic groups is. In the present invention, the IEC is defined as a value determined using a neutralization titration method. The IEC determined by neutralization titration can be calculated in accordance with the method described in Examples.

For the polymer electrolyte, having crystallinity means any one of being crystallizable through heating and being already crystallized. The case in which a crystallization calorie measured by differential scanning calorimetry (DSC) is 0.1 J/g or more is determined to be being crystallizable through heating. In addition, the case in which a degree of crystallinity measured by wide-angle X-ray diffraction is 0.5% or more is determined to be being already crystallized.

The weight-average molecular weight of the polymer electrolyte is more preferably 200,000 or more, still more preferably 220,000 or more, particularly preferably 250,000 or more, from the viewpoint of controlling the permeability ratio $TR_{50}$ of the electrolyte membrane to 3.0 or more. In addition, the weight-average molecular weight is more preferably 800,000 or less, still more preferably 700,000 or less, particularly preferably 600,000 or less.

The ion exchange capacity of the polymer electrolyte is more preferably 1.9 meq/g or more, still more preferably 2.0 meq/g or more, particularly preferably 2.1 meq/g or more. In addition, the ion exchange capacity is more preferably 3.0 meq/g or less, still more preferably 2.9 meq/g or less, particularly preferably 2.8 meq/g or less.

The crystallization calorie of the polymer electrolyte is preferably 1.0 J/g or more, more preferably 3.0 J/g or more, still more preferably 5.0 J/g or more, particularly preferably 10.0 J/g or more. In addition, the upper limit of the crystallization calorie is preferably 40.0 J/g or less.

The degree of crystallinity of the polymer electrolyte is preferably 1.0% or more, more preferably 2.0% or more, particularly preferably 3.0% or more. In addition, the degree of crystallinity is preferably 30.0% or less, more preferably 25.0% or less, particularly preferably 20.0% or less.

The phase-separation structure of the polymer electrolyte membrane is roughly classified into one of the four structures: co-continuous, lamellar, cylindrical, and sea-island. Among these, the co-continuous phase-separation structure is most preferable.

Preferable examples of the hydrocarbon polymer electrolyte include an aromatic hydrocarbon polymer. Examples of the aromatic hydrocarbon polymer include a polyether ketone polymer, polyarylene polymer, and polyether sulfone polymer. Among these, a polyether ketone polymer is preferable. Examples of the polyether ketone polymer include polyether ketone, polyether ketone ketone, polyether ether ketone, polyether ether ketone ketone, and polyether ketone ether ketone ketone.

In addition, the aromatic hydrocarbon polymer is preferably a random copolymer or a block copolymer containing an ionic component and a nonionic component, particular preferably a block copolymer. Specifically, a block copolymer of an ionic segment (containing a constituent unit containing an ionic group) and a nonionic segment (containing a constituent unit containing no ionic group) is preferable. In particular, a polyether ketone block copolymer is preferable. The nonionic segment may contain an ionic group in a small amount to the extent of not impairing the effects of the present invention.

In a block copolymer of an ionic segment and a nonionic segment, the molar composition ratio ($S_{E1}/S_{E2}$) of the ionic segment ($S_{E1}$) to the nonionic segment ($S_{E2}$) is preferably 0.20 or more, more preferably 0.33 or more, still more

preferably 0.50 or more. Furthermore, the molar composition ratio ($S_{E1}/S_{E2}$) is preferably 5.00 or less, more preferably 3.00 or less, still more preferably 2.50 or less. The molar composition ratio ($S_{E1}/S_{E2}$) of 0.20 or more or 5.00 or less makes it easy to control the permeability ratio $TR_{50}$ of the electrolyte membrane to 3.0 or more. In addition, a polymer electrolyte membrane composed of such a block copolymer is preferable, in that a co-continuous phase-separation structure is formed easily.

As described above, an aromatic hydrocarbon block copolymer is preferably used, a polyether ketone block copolymer is more preferably used, as the polymer electrolyte. As the polyether ketone block copolymer, the following polyether ketone block copolymer having a segment containing a constituent unit (S1) containing an ionic group and a segment containing a constituent unit (S2) not containing an ionic group, is particularly preferable.

[Chemical Formula 1]

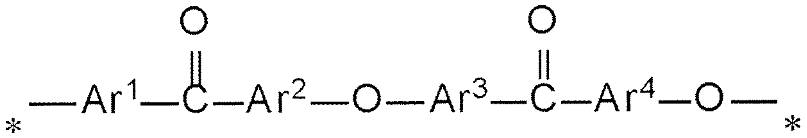 (S1)

In the general formula (S1), $Ar^1$ to $Ar^4$ each represent an arbitrary divalent arylene group, $Ar^1$ and/or $Ar^2$ contain(s) an ionic group, and $Ar^3$ and $Ar^4$ may or may not contain an ionic group. $Ar^1$ to $Ar^4$ may be optionally substituted, and may each independently be two or more kinds of arylene groups. The symbol * represents a binding site to the general formula (S1) or another constituent unit. Here, the ionic group is an ionic group having any one of a cation exchange ability and an anion exchange ability. Examples of the ionic groups include a sulfonic group, sulfonimide group, sulfate group, phosphonic group, phosphate group, carboxylic group, ammonium group, phosphonium group, and amino group.

[Chemical Formula 2]

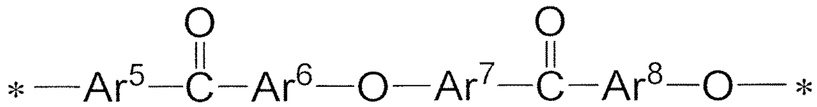 (S2)

In the general formula (S2), $Ar^5$ to $Ar^8$ each represent an arbitrary divalent arylene group, and may be optionally substituted, but do not contain an ionic group. $Ar^5$ to $Ar^8$ may each independently be two or more kinds of arylene groups. The symbol * represents a binding site to the general formula (S2) or another constituent unit.

Herein, preferable examples of the divalent arylene group for $Ar^1$ to $Ar^8$ include, but are not limited to, hydrocarbon arylene groups such as a phenylene group, a naphthylene group, a biphenylene group, and a fluorenediyl group, and heteroarylene groups such as pyridinediyl, quinoxalinediyl, and thiophenediyl. Here, the "phenylene group" can be any one of the three kinds: an o-phenylene group, an m-phenylene group, and a *p*-phenylene group, depending on the position of the binding site between the benzene ring and another constituent unit. The term "phenylene group" is used as a generic term for these groups, unless otherwise specified herein. The same applies to the other divalent arylene groups, such as the "naphthylene group" and the "biphenylene group". $Ar^1$ to $Ar^8$ are preferably phenylene groups and ionic group-containing phenylene groups, most preferably *p*-phenylene groups and ionic group-containing p-phenylene groups. Furthermore, $Ar^5$ to $Ar^8$ may be substituted with a group other than an ionic group, but from the viewpoints of proton conductivity, chemical stability, and physical durability, $Ar^5$ to $Ar^8$ are more preferably unsubstituted groups.

An electrolyte membrane according to an embodiment of the present invention is preferably an electrolyte membrane that has higher permeability ratio TR (TH/TO) of the hydrogen permeability (TH) to the oxygen permeability (TO) at a lower relative humidity (during measurement). Using such an electrolyte membrane makes it possible to effectively inhibit platinum elution from the cathode in the starting/stopping processes.

Preferably at least one of the following formulae 1 to 3 is satisfied, more preferably at least two of the formulae are satisfied, particularly preferably all of the formulae are satisfied, wherein $TR_{25}$ ($TH_{25}/TO_{25}$) is the permeability ratio of the hydrogen permeability ($TH_{25}$) to the oxygen permeability ($TO_{25}$) of an electrolyte membrane at 65°C and 25% RH, and $TR_{95}$ ($TH_{95}/TO_{95}$) is the permeability ratio of the hydrogen permeability ($TH_{95}$) to the oxygen permeability ($TO_{95}$) of the electrolyte membrane at 65°C and 95% RH.

<formula 1> $TR_{25} / TR_{50} \geq 1.2$

<formula 2> $TR_{50} / TR_{95} \geq 1.5$

<formula 3> $TR_{25} / TR_{95} \geq 2.5$

Furthermore, with respect to the formula 1, $TR_{25}/TR_{50}$ is more preferably 1.3 or more, particularly preferably 1.4 or more, and the upper limit is preferably 4.0 or less. With respect to the formula 2, $TR_{50}/TR_{95}$ is more preferably 2.0 or more, particularly preferably 2.3 or more, and the upper limit is preferably 6.0 or less. With respect to the formula 3, $TR_{25}/TR_{95}$ is more preferably 3.0 or more, particularly preferably 3.5 or more, and the upper limit is preferably 9.0 or less.

The water vapor permeability of the electrolyte membrane is preferably relatively small. That is, by controlling the movement of water in the electrolyte membrane to be relatively small, invasion and precipitation of a platinum ion, which was eluted from the cathode catalyst layer, into the electrolyte membrane can be further inhibited.

From the above-described viewpoint, the water vapor permeability of the electrolyte membrane is preferably $1.5 \times 10^{-5}$ $cm^3 \cdot cm/(cm^2 \cdot cmHg \cdot s)$ or less, more preferably $1.0 \times 10^{-5}$ $cm^3 \cdot cm/(cm^2 \cdot cmHg \cdot s)$ or less. In addition, the lower limit of the water vapor permeability is preferably $5.0 \times 10^{-7}$ $cm^3 \cdot cm/(cm^2 \cdot cmHg \cdot s)$ or more from the viewpoint of inhibiting the anode from being dried when applying a high electrical current. Here, the water vapor permeability of the electrolyte membrane is a value calculated in accordance with the following calculating formula, by using: the permeation rate ($cm^3$/s) of water at 85°C from the cathode to the anode, the thickness (cm) of the electrolyte membrane, the pressure difference (cmHg), and the permeation area ($cm^2$), at 55% RH in a cathode and at 0% RH in an anode.

Water vapor permeability ($cm^3 \cdot cm/(cm^2 \cdot cmHg \cdot s)$) = {water vapor permeation rate ($cm^3$/s) $\times$ thickness of electrolyte membrane (cm)} / {(gas pressure difference (cmHg) $\times$ permeation area ($cm^2$))} <calculating formula>

An electrolyte membrane in the present invention preferably contains a porous base material. An electrolyte membrane containing a porous base material can be produced, for example, by impregnating a porous base material with a polymer electrolyte. Examples of the constitution of such an electrolyte membrane include a constitution having a polymer electrolyte layer arranged on one surface or both surfaces of a composite layer containing a porous base material and a polymer electrolyte, i.e., the constitution (I) "polymer electrolyte layer/composite layer" or the constitution (II) "polymer electrolyte layer/composite layer/polymer electrolyte layer". Among these constitutions, the constitution (II) is preferable from the viewpoint of enhancing adhesion between the electrolyte membrane and both catalyst layers. Here, the polymer electrolyte layer is a layer containing no porous base material and containing a polymer electrolyte.

The thickness of the composite layer is preferably 10 to 90%, more preferably 15 to 80%, still more preferably 20 to 70%, particularly preferably 25 to 50%, with respect to 100% of the total thickness of the electrolyte membrane. Here, the thickness of the composite layer means the thickness of the porous base material.

Examples of the form of the porous base material include a woven fabric, nonwoven fabric, porous film, and mesh fabric. Examples of a material for the porous base material include: a hydrocarbon porous base material containing a hydrocarbon polymer as a main component; and a fluorine porous base material containing a fluorine polymer as a main component.

Examples of the hydrocarbon polymer include a polyethylene (PE), polypropylene (PP), polystyrene (PS), polyacrylate, polymethacrylate, polyvinyl chloride (PVC), polyvinylidene chloride (PVdC), polyester, polycarbonate (PC), polysulfone (PSU), polyether sulfone (PES), polyphenylene oxide (PPO), polyarylene ether polymer, polyphenylene sulfide (PPS), polyphenylene sulfide sulfone, polyparaphenylene (PPP), polyarylene polymer, polyarylene ketone, polyether ketone (PEK), polyether ether ketone (PEEK), polyether ketone ketone (PEKK), polyarylene phosphine oxide, polyether phosphine oxide, polybenzoxazole (PBO), polybenzothiazole (PBT), polybenzimidazole (PBI), polyamide (PA), polyimide (PI), polyetherimide (PEI), and polyimide sulfone (PIS).

Examples of the fluorine polymer include polytetrafluoroethylene (PTFE), polyhexafluoropropylene, a tetrafluoroethylene-hexafluoropropylene copolymer (FEP), an ethylene-tetrafluoroethylene copolymer (ETFE), polyvinylidene difluoride (PVdF), polychlorotrifluoroethylene (PCTFE), a perfluoroalkoxy fluororesin (PFA), and an ethylene-chlorotrifluoroethylene copolymer (ECTFE).

Among the above-described porous base materials, a porous film and a nonwoven fabric are preferable. Preferable examples of the porous film include a stretched porous film of polytetrafluoroethylene (PTFE). Preferable examples of the nonwoven fabric include a nonwoven fabric composed of nanofiber, and produced by an electrospinning method or the like. Preferable examples of the nanofiber include polyether sulfone (PES), polyether ketone (PEK), polyether ether ketone (PEEK), and polybenzimidazole (PBI).

The electrolyte membrane may contain any kind of additive, for example, an antioxidant, surfactant, radical scavenger, hydrogen peroxide decomposer, nonelectrolyte polymer, elastomer, or filler to the extent of not impairing the effects of the present invention.

The thickness of the electrolyte membrane is preferably in the range of from 1 to 100 μm, more preferably in the range of from 3 to 50 μm, still more preferably in the range of from 4 to 30 μm, particularly preferably in the range of from 5 to

15 μm. Among these ranges of the membrane thickness, the thickness is preferably 3 μm or more, more preferably 4 μm or more particularly preferably 5 μm or more, from the viewpoint of enhancing the durability of a fuel cell, and is preferably 15 μm or less, more preferably less than 13 μm, particularly preferably less than 10 μm, from the viewpoint of enhancing the power generation performance.

[Methods of Producing Electrolyte Membrane and Catalyst Coated Membrane]

Methods of producing an electrolyte membrane and a catalyst coated membrane will be described below, and the present invention is not limited to these producing methods.

An electrolyte membrane can be produced, for example, by applying a polymer electrolyte solution to a film-forming base material, such as a glass plate or a PET film, and drying the solution. In cases where the electrolyte membrane contains a porous base material, the electrolyte membrane can be produced, for example, by attaching the porous base material onto a polymer electrolyte solution applied to a film-forming base material, impregnating the porous base material with the solution, further applying a polymer electrolyte solution to the porous base material, and drying the resulting product. This producing method can provide an electrolyte membrane having the above-described constitution (II).

A polymer electrolyte to be used may be a polymer electrolyte in which an ionic group and a cation of an alkali metal or an alkaline earth metal forms a salt. In such a case, after forming an electrolyte membrane or a composite membrane on a film-forming base material, an acid treatment to exchange the cation of the alkali metal or the alkaline earth metal with a proton is preferably performed. Here, for the acid treatment, a known method may be adopted.

Examples of a method of laminating a catalyst layer on an electrolyte membrane include a coating method, a transcribing method, or a combination of a coating method and a transcribing method. As such a method, a known method may be adopted, without particular limitation.

Examples of the coating method include a method in which a coating liquid for a cathode catalyst layer is applied to an electrolyte membrane, and dried to form the cathode catalyst layer, and a coating liquid for an anode catalyst layer is applied to the opposite surface of the electrolyte membrane, and dried to form the anode catalyst layer. The order of lamination of the cathode catalyst layer and the anode catalyst layer may be opposite to the above-described order. In cases where a coating method is adopted, a supporting base material, such as a PET film, is preferably laminated on the opposite surface of the electrolyte membrane from the surface to which the coating liquid for the catalyst layer is applied.

The transcribing method is a method in which a catalyst decal having a catalyst layer laminated on a transcribing base material is produced; the catalyst layer of this catalyst decal is opposed to an electrolyte membrane; the resulting product is hot-pressed to transcribe the catalyst layer onto the electrolyte membrane. Examples of the transcribing base material include a polytetrafluoroethylene film, polyethylene terephthalate film, and polyimide film.

Specific examples include a method in which a cathode catalyst decal having a cathode catalyst layer laminated on a transcribing base material and an anode catalyst decal having an anode catalyst layer laminated on a transcribing base material are each prepared, an electrolyte membrane is sandwiched between the cathode catalyst decal and the anode catalyst decal, and the resultant is hot-pressed.

Examples of a combined method of a coating method and a transcribing method include a method in which a coating liquid for a cathode catalyst layer is first applied to an electrolyte membrane, and dried to form a cathode catalyst layer; an anode catalyst decal is then attached to the opposite surface of the electrolyte membrane, and the resultant is hot-pressed to transcribe the anode catalyst layer. Conversely, the method may be a method in which a coating liquid for an anode catalyst layer is applied, and a cathode catalyst layer is then transcribed.

A method preferably adopted for a catalyst coated membrane according to an embodiment of the present invention is a method in which a coating liquid for an anode catalyst layer is applied to an electrolyte membrane, and dried to form an anode catalyst layer; a cathode catalyst decal is then attached to the opposite surface of the electrolyte membrane, and the resultant is hot-pressed to transcribe the cathode catalyst layer. An anode catalyst layer in the second embodiment is a relatively thin film. Accordingly, applying the anode catalyst layer directly to an electrolyte membrane can form a uniform membrane more stably. On the other hand, a cathode catalyst layer is a relatively thick film. Thus, laminating the cathode catalyst layer by a transcribing method can form a uniform membrane more stably.

A catalyst coated membrane according to an embodiment of the present invention encompasses a form in which a gas diffusion electrode having a catalyst layer laminated on a gas diffusion layer and an electrolyte membrane are joined with each other via the above-described catalyst layer. The details will be described below.

[Membrane Electrode Assembly]

A membrane electrode assembly (MEA) includes a catalyst coated membrane according to an embodiment of the present invention and a gas diffusion layer arranged on both surfaces of the catalyst coated membrane. Specifically, a cathode gas diffusion layer and an anode gas diffusion layer are arranged on, and joined with, the cathode catalyst layer

side of a catalyst coated membrane and the anode catalyst layer side of the catalyst coated membrane, respectively. Hereinafter, the cathode gas diffusion layer and the anode gas diffusion layer are referred to collectively as a "gas diffusion layer".

The gas diffusion layer is generally constituted by a member having gas permeability and electron conductivity. The gas diffusion layer preferably contains a carbon sheet and a microporous layer. Here, the microporous layer is arranged so as to be on the catalyst layer side.

Preferable examples of the carbon sheet include a porous substance containing carbon fiber, such as carbon-fiber woven fabric, carbon paper, or carbon-fiber nonwoven fabric; and a foamed carbonaceous porous substance containing carbon fiber. Among these, a porous substance containing carbon fiber is preferable from the viewpoint of excellent corrosion resistance, and carbon paper is still more preferable from the viewpoint of the springiness of the carbon sheet.

The microporous layer is preferably constituted by a water-repellent resin, such as polytetrafluoroethylene (PTFE), and an electroconductive filler. The electroconductive filler is preferably carbon powder. Examples of the carbon powder include carbon blacks, such as furnace black, acetylene black, lamp black, and thermal black; graphites, such as flake graphite, scaly graphite, earthy graphite, artificial graphite, expanded graphite, and flaky graphite; carbon nanotubes; linear carbon; and milled fiber of carbon fiber. Among these, carbon black is preferable.

The thickness of the gas diffusion layer is preferably in the range of from 50 to 300 μm, more preferably in the range of from 60 to 200 μm, particularly preferably in the range of from 70 to 150 μm.

The cathode gas diffusion layer and the anode gas diffusion layer may be the same or different in material, composition, and thickness.

[Method of Producing Membrane Electrode Assembly]

Examples of a method of producing a membrane electrode assembly include: (I) a method in which a gas diffusion layer is joined with each of both surfaces of a catalyst coated membrane; and (II) a method in which a gas diffusion electrode having a catalyst layer laminated on one surface of a gas diffusion layer is produced, and an electrolyte membrane is then sandwiched between, and joined with, a pair of the gas diffusion electrodes via the catalyst layers.

[Application Examples]

A catalyst coated membrane according to an embodiment of the present invention can be used, for example, for an electrochemical application. Examples of the electrochemical application include fuel cells, water electrolysis apparatuses, and electrochemical hydrogen compressing apparatus. Among these, a fuel cell is a preferable application.

[Fuel Cell]

A catalyst coated membrane and a membrane electrode assembly according to embodiment of the present invention are preferably used for a fuel cell.

A fuel cell usually has a constitution in which a plurality of cells each containing a membrane electrode assembly are stacked. FIG. 1 is a perspective view for describing the structure of a fuel cell. A membrane electrode assembly (MEA) 4 has a constitution in which an anode catalyst layer 2a and an anode gas diffusion layer 1a are arranged on one surface of an electrolyte membrane 3, and a cathode catalyst layer 2b and a cathode gas diffusion layer 1b are arranged on the other surface. Then, the membrane electrode assembly 4 is joined with an anode separator 5a and a cathode separator 5b to constitute a cell 10.

A surface of the anode separator 5a, with which surface the anode gas diffusion layer 1a is joined, has a plurality of grooves formed therein, which grooves serve as flow paths through which hydrogen gas 6 passes. The hydrogen gas 6 supplied into the grooves of the anode separator 5a passes through the anode gas diffusion layer 1a, reaches the anode catalyst layer 2a, and is used for oxidation reaction. In addition, a surface of the cathode separator 5b, with which surface the cathode gas diffusion layer 1b is joined, has a plurality of grooves formed therein, which grooves serve as flow paths through which air or oxygen gas 7 passes. The air or oxygen gas 7 supplied into the grooves of the anode separator 5b passes through the cathode gas diffusion layer 1b, reaches the cathode catalyst layer 2b, and is used for reduction reaction.

Starting, ordinary working, and stopping are repeated in the operation of a fuel cell. It has been revealed in such operation of the cell that the lower the relative humidity in a cell at the starting and the stopping is, the more effectively elution of platinum from a cathode catalyst layer and precipitation of platinum in the electrolyte membrane in the starting/stopping processes can be inhibited in a catalyst coated membrane and a membrane electrode assembly according to the present invention. Hereinafter, the phrase "at the starting and the stopping" are referred to as "at the starting/stopping". Specifically, in a case where the relative humidity in a cell at the starting/stopping is 50% or less, elution

and precipitation of platinum can be inhibited effectively.

That is, a method of operating a fuel cell including a stack of a plurality of cells each containing a membrane electrode assembly according to the present invention is preferably controlled in such a manner that the relative humidity in the cell at the starting/stopping is 50% or less.

Examples of a method of controlling a relative humidity to 50% or less in a fuel cell at the starting/stopping of the cell include a method in which a scavenging treatment is performed at the stopping of operation. Examples of the scavenging treatment include a method in which scavenging gas is supplied to the cathode and/or the anode. Examples of the scavenging gas include hydrogen gas, oxygen gas, and air. By adjusting the humidity of, and controlling the flow rate of, such gas, the relative humidity in the cell can be controlled. From the viewpoint of inhibition of deterioration, scavenging gas is preferably not humidified. In this regard, the relative humidity in a cell can be estimated from the high-frequency resistance (HFR) of impedance, utilizing the fact that ohmic resistance has humidity dependence. However, the estimation is not limited to this method.

As scavenging gas to be used for the cathode, air that is not humidified is suitable. As scavenging gas to be used for the anode, hydrogen that is not humidified is preferable from the viewpoint of inhibition of deterioration, and air is more suitable from the viewpoint of safety.

The relative humidity in a cell is preferably 40% or less, more preferably 30% or less, particularly preferably 20% or less.

## EXAMPLES

The present invention will now be described in further detail with reference to Examples, but the present invention is not limited to these. In this regard, the various measurement conditions are as follows.

### (1) Molecular weight of polymer

The number-average molecular weight and weight-average molecular weight of a polymer solution were measured by GPC. HLC-8022GPC manufactured by Tosoh Corporation was used as an ultraviolet detector-differential refractometer integrated device. Two TSKgel SuperHM-H columns (having an inner diameter of 6.0 mm and a length of 15 cm) manufactured by Tosoh Corporation were used as GPC columns. The measurement was performed with an *N*-methyl-2-pyrrolidone solvent (N-methyl-2-pyrrolidone solvent containing 10 mmol/L lithium bromide) at a flow rate of 0.2 mL/min, and the number-average molecular weight and the weight-average molecular weight were determined in terms of standard polystyrene.

### (2) Ion exchange capacity (IEC)

The ion exchange capacity was measured by the neutralization titration method described in i) to iv) below. The measurement was performed three times, and the average of the three measurements was adopted.

i) A polymer electrolyte was subjected to proton exchange and sufficiently washed with pure water, and water on the membrane surface was wiped off. Then, the electrolyte membrane was vacuum-dried at 100°C for 12 hours or more, and the dry weight of the membrane was determined.
ii) To the block copolymer, 50 mL of an aqueous 5 wt% sodium sulfate solution was added, and the resulting mixture was left to stand for 12 hours to undergo ion exchange.
iii) The sulfuric acid generated was titrated using an aqueous 0.01 mol/L sodium hydroxide solution. A commercially available 0.1 w/v% phenolphthalein solution for titration was added as an indicator, and the point at which the solution turned to pale red-purple was taken as the end point.
iv) The IEC was determined in accordance with the following formula.

IEC (meq/g) = [concentration (mmol/ml) of aqueous sodium hydroxide solution × dropping amount (ml)] / dry weight (g) of sample

### (3) Measurement of amount of platinum in catalyst layer

First, the areal weight of a catalyst layer was determined (calculated from the area and the mass). In cases where a catalyst decal was used to form a catalyst layer, the areal weight of the catalyst layer was obtained by subtracting the areal weight of a base material from the areal weight of the catalyst decal. In cases where a coating liquid for a catalyst layer was directly applied to an electrolyte membrane to form a catalyst layer, the areal weight of the catalyst layer was obtained by subtracting the areal weight of the electrolyte membrane from the areal weight of this laminate (the electrolyte

membrane/the catalyst layer). Using the below-described fluorescence X-ray analysis device, the platinum concentration (wt%) of each of the catalyst decal and the laminate was measured. The areal weight of the catalyst layer, as determined above, was multiplied by the platinum concentration to calculate the amount of platinum. A measurement was made at five points, and the average of the five measurements was regarded as the amount ($mg/cm^2$) of platinum of the catalyst.

<Fluorescence X-ray analysis device>

- Manufacturer: Rigaku Corporation
- Product name: NFX DE
- Measuring method: the FP (fundamental parameters) method
- Tube voltage: continuous measurement under two conditions, 6.5 kV and 35 kV
- Tube current: automatic (automatically adjusted by the device in the range in which the X-ray intensity and the electric current are in a proportional relationship)
- Measurement time: 100 sec under any of the voltage conditions = 200 sec in total

(4) Method of measuring BET specific surface area of platinum-supporting carbon particles

Platinum-supporting carbon particles were placed in a glass-made container, and then vacuum-dried at 23°C for 16 hours.

Subsequently, the platinum-supporting carbon particles vacuum-dried were placed in a special container and pretreated, the mass of which special container had been measured after the special container was preliminarily dried in accordance with the below-described conditions.

Upon completion of the pretreatment, the mass of the special container and the platinum-supporting carbon particles was measured. From the difference between the mass measured and the mass of the platinum-supporting carbon particles, the mass of the special container was calculated. Subsequently, the special container containing the platinum-supporting carbon particles pretreated was mounted on the measurement device. A gas-adsorption measurement was performed in accordance with the below-described conditions, and an adsorption isotherm with $p/V(p^0-p)$ as the ordinate and $p/p^0$ as the abscissa was prepared. From the adsorption isotherm, data corresponding to 0.05 to 0.3 along the abscissa $p/p^0$ were extracted. The BET specific surface area was calculated from the slope and ordinate intercept of an approximate curve prepared using the least-squares method. The meanings of the symbols above are described below.

<Pretreatment conditions>

- Device: BELPREP VAC II (manufactured by MicrotracBEL Corp.)
- Temperature: 100°C
- Time: 5 hours
- Treatment atmosphere: degassing under reduced pressure at 10 Pa or less

<Measurement of BET specific surface area>

- Device: BELSORP-18 PLUS HT (manufactured by MicrotracBEL Corp.)
- Temperature: 77 K (liquid nitrogen temperature)
- Dead volume measuring gas: He
- Adsorbate: $N_2$
- Equilibrium setting time: 180 seconds (a stabilization waiting time at each pressure)
- Specific surface area analysis method: the BET method

<Meanings of symbols>

- V: the amount of $N_2$ adsorbed in the surface of the catalyst at each pressure

- p: pressure measured
- $p^0$: atmospheric pressure
- $p/p^0$: relative pressure

(5) Measurement of thickness of electrolyte membrane and catalyst layer

A cross section of a catalyst coated membrane was observed under a scanning electron microscope (SEM) in accordance with the below-described conditions. From the image obtained, the thickness of each of an electrolyte membrane and a catalyst layer was measured.

- Device: a field emission scanning electron microscope (FE-SEM) S-4800 (manufactured by Hitachi High-Technologies Corporation)
- Accelerating voltage: 2.0 kV
- Pretreatment: a cross-sectional sample produced by the BIB method was coated with Pt, and measured.
- BIB method: a cross-sectional sample production device to be used with an argon ion beam. A shielding plate was placed directly on the sample, and the sample was irradiated with a broad ion beam of argon, and thereby etched to produce an observation surface/analysis surface (cross section).

In addition, the thickness of a composite layer constituting an electrolyte membrane and the thickness of a polymer electrolyte layer were measured using the above-described method.

(6) Measurement of hydrogen permeability and oxygen permeability of electrolyte membrane

The hydrogen permeability (mol·cm/(s·cm$^2$·kPa)) and oxygen permeability (mol·cm/(s·cm$^2$·kPa)) of an electrolyte membrane at 65°C and 50% RH were measured using the below-described procedure.

<Production of cell for gas concentration detection>

A catalyst layer (the amount of platinum, 0.8 mg/cm$^2$) was laminated on each of both surfaces of a commercially available electrolyte membrane ("Nafion" (registered trademark) N117 manufactured by The Chemours Company). This catalyst layer was constituted by platinum-supporting carbon and a fluorine polymer electrolyte ("Nafion" (registered trademark) manufactured by The Chemours Company). A commercially available gas diffusion layer 24BC manufactured by SGL Carbon AG was joined with both the anode side and the cathode side of the above-described catalyst coated membrane to produce a membrane electrode assembly. This membrane electrode assembly was incorporated into a cell for evaluating a serpentine-flow-type fuel cell (electrode area: 40 cm$^2$), and connected with a potentiostat. The resulting assembly was used as a cell for gas concentration detection.

<Production of sample cell>

A laminate in which a gas diffusion layer 24BC manufactured by SGL Carbon AG was arranged on both surfaces of the electrolyte membrane to be measured was incorporated into a cell (electrode area: 40 cm$^2$) for evaluating a serpentine-flow-type fuel cell. The resulting assemble was used as a sample cell. In this regard, one electrode of the above-described laminate works as a nitrogen electrode, and the other electrode works as a hydrogen electrode during measurement of hydrogen permeability and as an oxygen electrode during measurement of oxygen permeability.

<Measurement of hydrogen permeability>

The nitrogen electrode outlet of the sample cell and the anode inlet of the cell for gas concentration detection were connected. Hydrogen gas at 65°C and 50% RH was introduced at 30 NL/h into the hydrogen electrode inlet of the sample cell, and nitrogen gas at 65°C and 50% RH was introduced at 30 NL/h into the inlet of the nitrogen electrode. The temperature of the cell was raised to 65°C. The pressure in each of the hydrogen electrode and the nitrogen electrode was set to 2 bara.

Into the cathode of the cell for gas concentration detection, nitrogen gas at 40 NL/h and hydrogen gas at 3 NL/h, each not humidified, were introduced. The pressure of each gas was set to 1 bara. The nitrogen gas from the outlet of the nitrogen electrode of the sample cell was dehumidified, and then introduced into the anode cell for gas concentration detection. The temperature in each cell was set to room temperature.

Using a potentiostat, 500 mV was applied to the cell for gas concentration detection. The hydrogen oxidation current (A/cm$^2$) was measured. The hydrogen permeability (mol·cm/(s·cm$^2$·kPa)) was calculated in accordance with the

following formula.

Hydrogen permeability = (hydrogen oxidation current) × (thickness of electrolyte membrane) / ((Faraday constant) × (gas pressure difference) × 2)

<Measurement of oxygen permeability>

The nitrogen electrode outlet of the sample cell and the cathode inlet of the cell for gas concentration detection were connected. Oxygen gas at 65°C and 50% RH was introduced at 30 NL/h into the oxygen electrode inlet of the sample cell, and nitrogen gas at 65°C and 50% RH was introduced at 30 NL/h into the inlet of the nitrogen electrode. The temperature of the cell was raised to 65°C. The pressure of each of the oxygen electrode and the nitrogen electrode was set to 2 bara.

Into the anode of the cell for gas concentration detection, nitrogen gas at 40 NL/h and oxygen gas at 3 NL/h, each not humidified, were introduced. The pressure was set to 1 bara. The nitrogen gas from the outlet of the nitrogen electrode of the sample cell was dehumidified, and then introduced into the cathode. The temperature of each cell was set to room temperature.

Using a potentiostat, 500 mV was applied to the cell for gas concentration detection. The oxygen reduction current (A/$cm^2$) was measured. The oxygen permeability (mol·cm/(s·$cm^2$·kPa)) was calculated in accordance with the following formula.

Oxygen permeability = (oxygen reduction current) × (thickness of electrolyte membrane) / ((Faraday constant) × (gas pressure difference) × 4)

In the same manner as above, the hydrogen permeability and oxygen permeability of the electrolyte membrane at 65°C and 25% RH and at 65°C and 95% RH were measured.

(7) Measurement of water vapor permeability of electrolyte membrane

A laminate in which a gas diffusion layer 24BC manufactured by SGL Carbon AG was arranged on both surfaces of the electrolyte membrane to be measured was incorporated into a cell (electrode area: 40 $cm^2$) for evaluating a fuel cell. The resulting assemble was used as a sample cell. The cell is heated to 85°C. A gas mixture of nitrogen and water vapor was adjusted to 85°C and 55% RH, and introduced at 80 NL/h into the cathode inlet of the cell. A flow of Dry hydrogen in parallel with the cathode gas was introduced at 80 NL/h into the anode inlet. Water discharged from each of the cathode outlet and the anode outlet was weighed out on a precision balance. The water vapor permeation rate ($cm^3$/s) of the permeation from the cathode to the anode was estimated. The water vapor permeability ($cm^3$·cm/($cm^2$·cmHg·s)) was calculated in accordance with the following formula.

Water vapor permeability = water vapor permeation rate ($cm^3$/s) × thickness of electrolyte membrane (cm) / (gas pressure difference (cmHg) × permeation area ($cm^2$))

(8) Evaluation of durability of fuel cell

A gas diffusion layer 24BC manufactured by SGL Carbon AG was superposed on both surfaces of the catalyst coated membrane obtained each of Examples and Comparative Examples. The resulting product was hot-pressed at 160°C at 4.5 Ma for 5 minutes to produce a membrane electrode assembly. This membrane electrode assembly was incorporated into a cell of evaluating a serpentine-flow-type fuel cell (electrode area: 40 $cm^2$). The durability of the resulting fuel cell was evaluated when starting and stopping of the cell were repeated.

[Durability 1 (relative humidity of cell: 100%)]

Starting and stopping were performed under the following conditions.

1) The temperature of the cell was set to 35°C. Humidified hydrogen at 100% RH was introduced at 19.1 NL/h into the anode, and humidified air at 100% RH was introduced at 75.9 NL/h into the cathode. The electric current was swept at 0.4 A/$cm^2$, and the cell was retained for 1 minute.
2) Next, with the electric current set to 0 A/$cm^2$ (in the OCV state), and with the cathode gas flow rate maintained, the hydrogen flow rate was brought to zero, and the cell was retained for 10 seconds.

3) Then, air humidified at 100% RH was introduced at a flow rate of 11.0 NL/h into the anode, and the cell was retained for 5 seconds.
4) Next, the flow rate of the air humidified at 100% RH in the anode was decreased to 3.8 NL/h, and the cell was retained for 55 seconds.
5) Then, humidified hydrogen at 100% RH was introduced at 11.9 NL/h into the anode, and the cell was retained for 10 seconds.

Assuming that the conditions 1) to 5) constituted one cycle, 5,000 cycles were performed. The following evaluation A (evaluation of the ratio of decrease of voltage) and evaluation B (evaluation of the ratio of maintenance of the electrochemical surface area of platinum) were performed.

<Evaluation A>

At the initial stage (0 cycle) and after every 500th cycle, a voltage at 1.2 $A/cm^2$ was measured under the following conditions, and the voltage-decrease average per cycle (μV/cycle) was calculated. In this regard, that the voltage-decrease average is smaller means that the durability is better.

<Measurement conditions>

- Anode gas (hydrogen): 80°C, 100% RH; the gas pressure, 1.5 bara; the hydrogen stoichiometry, 1.5
- Cathode gas (air): 80°C, 100% RH; the gas pressure, 1.5 bara; the air stoichiometry, 2.0

<Evaluation B>

A cyclic voltammetric (CV) evaluation was performed under the below-described conditions. From the area of the hydrogen adsorption peak of the CV waveform at the second sweep, the electrical quantity of the hydrogen adsorption was calculated, and the electrochemical surface area ($cm^2_{Pt}/cm^2_{MEA}$) of platinum in the cathode was calculated using the electrochemical capacity per unit area 210 $\mu C/cm^2$ of platinum. The electrochemical surface area was measured at the initial stage (0 cycle) and after 5,000 cycles. The ratio (%) of maintenance of the electrochemical surface area of platinum was calculated in accordance with the following formula. In this regard, that the ratio of maintenance of the electrochemical surface area is larger means that the amount of elution of platinum is smaller.

$$A = (B / C) \times 100$$

(wherein A represents the ratio (%) of maintenance of the electrochemical surface area of platinum, B represents the electrochemical surface area of platinum after 5,000 cycles, and C represents the electrochemical surface area of platinum at the initial stage).

<Evaluation conditions>

- Anode gas: a gas mixture of nitrogen (flow rate: 40 NL/h) and hydrogen (3 NL/h), at 35°C and 100% RH and at a gas pressure of 1 bara
- Cathode gas: nitrogen (flow rate: 40 NL/h), at 35°C and 100% RH and at a gas pressure of 1 bara
- Range of potential sweep: 0.05 V to 1.0 V
- Number of sweeps: 2
- Sweep rate: 30 mV/s

[Durability 2 (relative humidity of cell: 50%)]

An evaluation was performed in the same manner as in Durability 1 except that the relative humidity of each of hydrogen and air was changed to 50% in the operations 1) to 5) above.

[Durability 3 (relative humidity of cell: 0%)]

An evaluation was performed in the same manner as in Durability 1 except that the relative humidity of each of hydrogen and air was changed to 0% in the operations 1) to 5) above.

(9) Evaluation of power generation performance

A commercially available gas diffusion layer 24BC manufactured by SGL Carbon AG was superposed on both surfaces of the catalyst coated membrane produced each of Examples and Comparative Examples. The resulting product was hot-pressed at 160°C at 4.5 Ma for 5 minutes to produce a membrane electrode assembly. Using this membrane electrode assembly, the power generation performance was evaluated in accordance with the below-described procedure.

<Evaluation of power generation performance>

The membrane electrode assembly was set in a JARI standard cell "Ex-1" (electrode area: 25 $cm^2$) manufactured by Eiwa Corporation, and used as a module for evaluating power generation. Hydrogen gas as fuel gas was supplied to the anode electrode, and air as oxidizing gas was supplied to the cathode electrode. Under the below-described conditions, the electric current was swept from 0 $A/cm^2$ to 2.5 $A/cm^2$ until the voltage became 0.2 V or less. The voltage was read at a current density of 1.5 $A/cm^2$ and 2.5 $A/cm^2$, and evaluated. The higher the voltage is, the better the power generation performance is. In addition, the ratio of decrease in voltage by a rise in the current density was determined by inserting the voltage (V0) at a current density of 1.5 $A/cm^2$ and the voltage (V1) at 2.5 $A/cm^2$ into the following formula. The smaller the ratio of decrease in voltage is, the better the power generation performance is.

$$\text{(Ratio (\%) of decrease in voltage)} = (V0 - V1) / V0 \times 100$$

<Power generation condition>

- Electronic load device: an electronic load device "PLZ664WA" manufactured by Kikusui Electronics Corp.
- Cell temperature: 80°C
- Relative humidity of supply gases (hydrogen gas and air): 30% RH
- Back pressure of supply gases (hydrogen gas and air): 150 kPa
- Ratio of gas utilization: 70% of the stoichiometric amount for the anode and 40% of the stoichiometric amount for the cathode

[Synthesis of Polymer electrolyte]

[Synthesis Example 1]

(Synthesis of 2,2-Bis(4-hydroxyphenyl)-1,3-dioxolane (K-DHBP) represented by the following chemical formula (G1))

In a 500 mL flask with a stirrer, a thermometer, and a distilling pipe, 49.5 g of 4,4'-dihydroxybenzophenone, 134 g of ethylene glycol, 96.9 g of trimethyl orthoformate, and 0.50 g of *p*-toluenesulfonic monohydrate were well mixed and dissolved. Then, the resulting solution was incubated and stirred at a temperature of 78 to 82°C for 2 hours. Furthermore, the internal temperature was raised gradually to 120°C, and the resulting solution was heated until the distillation of methyl formate, methanol, and trimethyl orthoformate stopped completely. This reaction solution was cooled to room temperature, the reaction solution was then diluted with ethyl acetate, and the organic layer was washed with 100 mL of an aqueous solution of 5% potassium carbonate and separated, followed by distilling off the solvent. To the residue, 80 mL of dichloromethane was added to precipitate a crystal, and the crystal was filtered and dried to obtain 52.0 g of 2,2-bis(4-hydroxyphenyl)-1,3-dioxolane represented by the following chemical formula (G1). This crystal was analyzed by GC, and found to be 99.9% 2,2-bis(4-hydroxyphenyl)-1,3-dioxolane and 0.1% 4,4'-dihydroxybenzophenone. The purity was 99.9%.

[Chemical Formula 3]

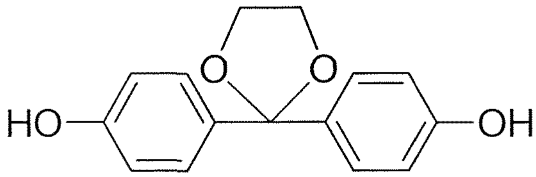

(G1)

[Synthesis Example 2]

(Synthesis of Disodium-3,3'-disulfonate-4,4'-difluorobenzophenone represented by the following chemical formula (G2))

In 150 mL of fuming sulfuric acid (50% $SO_3$) (a reagent from Fujifilm Wako Pure Chemical Corporation), 109.1 g of 4,4'-difluorobenzophenone (a reagent from Sigma-Aldrich Japan LLC) was allowed to react at 100°C for 10 hours. Then, the reaction product was added little by little to a large amount of water, and after the resulting solution was neutralized with NaOH, 200 g of sodium chloride (NaCl) and added to the solution to precipitate a synthesized product. The obtained precipitation was separated by filtration, and recrystallized with an aqueous ethanol solution to obtain disodium-3,3'-disulfonate-4,4'-difluorobenzophenone represented by the following chemical formula (G2). The purity was 99.3%.

[Chemical Formula 4]

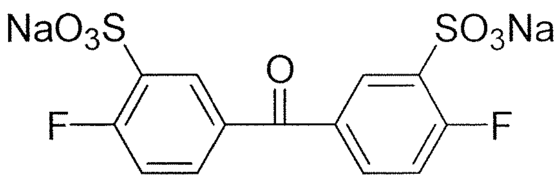

(G2)

[Synthesis Example 3]

(Synthesis of nonionic oligomer a1 represented by the following general formula (G3))

Into a 2,000 mL stainless-steel polymerizer with a stirrer, a nitrogen introduction tube, and a Dean-Stark trap, 16.59 g of potassium carbonate (an Aldrich reagent, 120 mmol), 25.83 g (100 mmol) of K-DHBP obtained in Synthesis Example 1, and 20.3 g of 4,4'-difluorobenzophenone (an Aldrich reagent, 93 mmol) were introduced. After the polymerizer was purged with nitrogen, 300 mL of *N*-methylpyrrolidone (NMP) and 100 mL of toluene were added thereto, the resulting mixture was dehydrated at 150°C, the temperature was raised to remove toluene, and the mixture was polymerized at 170°C for 3 hours. The resulting product was purified by reprecipitation in a large amount of methanol to obtain a nonionic oligomer a1 having a hydroxy end. The number-average molecular weight of this nonionic oligomer a1 having a hydroxy end was 10,000.

Into a 500 mL three-necked flask with a stirrer, a nitrogen introduction tube, and a Dean-Stark trap, 1.1 g of potassium carbonate (a reagent from Sigma-Aldrich Japan LLC, 8 mmol) and 20.0 g (2 mmol) of the nonionic oligomer a1 having a hydroxy end were introduced. After the device was purged with nitrogen, 100 mL of NMP and 30 mL of toluene were added thereto, the resulting mixture was dehydrated at 100°C, and the temperature was raised to remove toluene. Furthermore, 2.2 g of hexafluorobenzene (a reagent from Sigma-Aldrich Japan LLC, 12 mmol) was added, and the resulting mixture was allowed to react at 105°C for 12 hours. The resulting product was purified by reprecipitation in a large amount of isopropyl alcohol to obtain a nonionic oligomer a1 (having a fluoro end group) represented by the following general formula (G3). The number-average molecular weight was 11,000.

[Chemical Formula 5]

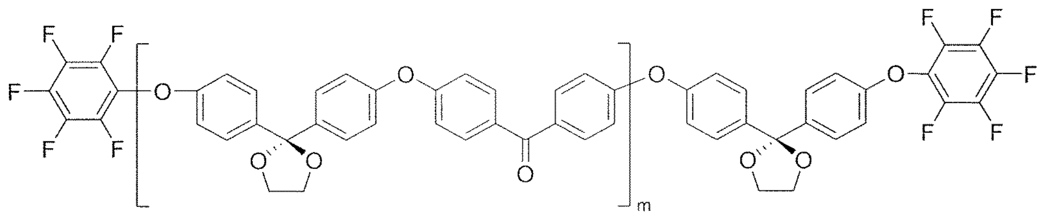

(G3)

[Synthesis Example 4]

(Synthesis of ionic oligomer a2 represented by the following general formula (G4))

Into a 2,000 mL stainless-steel polymerizer with a stirrer, a nitrogen introduction tube, and a Dean-Stark trap, 27.6 g of potassium carbonate (a reagent from Sigma-Aldrich Japan LLC, 200 mmol), 12.9 g (50 mmol) of K-DHBP obtained in Synthesis Example 1, 9.3 g of 4,4'-biphenol (a reagent from Sigma-Aldrich Japan LLC, 50 mmol), 39.3 g (93 mmol) of disodium-3,3'-disulfonate-4,4'-difluorobenzophenone obtained in Synthesis Example 2, and 17.9 g of 18-crown-6 (Fujifilm Wako Pure Chemical Corporation, 82 mmol) were introduced. After the polymerizer was purged with nitrogen, 300 mL of NMP and 100 mL of toluene were added thereto, the resulting mixture was dehydrated at 150°C, the temperature was raised to remove toluene, and the resulting mixture was polymerized at 170°C for 6 hours. The resulting product was purified by reprecipitation in a large amount of isopropyl alcohol to obtain an ionic oligomer a2 (having a hydroxy end group) represented by the following general formula (G4). The number-average molecular weight was 16,000. In this regard, in the general formula (G4), M represents a hydrogen atom, Na, or K.

[Chemical Formula 6]

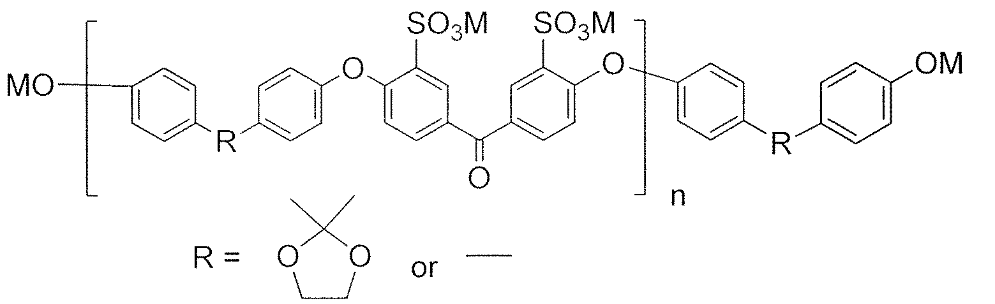

R =

or

(G4)

(In the general formula (G4), M represents H, Na, or K.)

[Synthesis Example 5]

(Synthesis of neopentyl 3-(2,5-dichlorobenzoyl)benzenesulfonate represented by the following chemical formula (G5))

Into a 3 L three-necked flask with a stirrer and a cooling tube, 245 g (2.1 mol) of chlorosulfonic acid was added, subsequently 105 g (420 mmol) of 2,5-dichlorobenzophenone was added, and the contents were reacted in an oil bath at 100°C for 8 hours. After a predetermined time, the reaction liquid was slowly poured into 1,000 g of crushed ice and extracted with ethyl acetate. The organic layer was washed with brine and dried over magnesium sulfate, and then ethyl acetate was distilled off to obtain a light yellow crude crystal of 3-(2,5-dichlorobenzoyl)benzenesulfonic acid chloride. The crude crystal was directly used without purification in the next step.

To 300 mL of pyridine, 41.1 g (462 mmol) of 2,2-dimethyl-1-propanol (neopentyl alcohol) was added, and the resulting mixture was cooled to approximately 10°C. The crude crystal obtained as described above was gradually added to the mixture over approximately 30 minutes. After all the crude crystal was added, the mixture was stirred for another 30 minutes to react. After the reaction, the reaction liquid was poured into 1,000 mL of aqueous hydrochloric acid, and the solid precipitated was collected. The solid obtained was dissolved in ethyl acetate, the resulting solution was washed with an aqueous sodium hydrogen carbonate solution and brine, dried over magnesium sulfate, and ethyl acetate was distilled off to obtain a crude crystal. The crude crystal was recrystallized from methanol to obtain a white crystal of neopentyl 3-(2,5-dichlorobenzoyl)benzenesulfonate represented by the following chemical formula (G5).

[Chemical Formula 7]

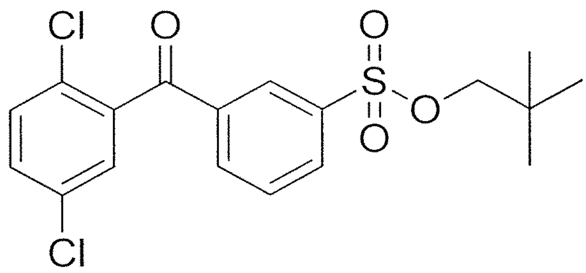

(G5)

[Synthesis Example 6]

(Synthesis of nonionic-group oligomer a3 represented by the following general formula (G6))

Into a 1 L three-necked flask with a stirrer, a thermometer, a cooling tube, a Dean-Stark tube, and a three-way cock for introducing nitrogen, 49.4 g (0.29 mol) of 2,6-dichlorobenzonitrile, 88.4 g (0.26 mol) of 2,2-bis(4-hydroxyphenyl)-1,1,1,3,3,3-hexafluoropropane, and 47.3 g (0.34 mol) of potassium carbonate were weighed. After the flask was purged with nitrogen, 346 mL of sulfolane and 173 mL of toluene were added, and the resulting mixture was stirred. The flask was placed in an oil bath and heated to 150°C for reflux. The water generated by the reaction was azeotropically distilled with toluene, and the reaction was continued while removing water out of the system with the Dean-Stark tube. As a result, generation of water almost ceased to be observed in approximately 3 hours. After most of toluene was removed while the reaction temperature was gradually raised, the reaction was continued at 200°C for 3 hours. Then, 12.3 g (0.072 mol) of 2,6-dichlorobenzonitrile was added, and the reaction was performed for another 5 hours.

The resulting reaction liquid was allowed to cool, and 100 mL of toluene was then added thereto for dilution. The precipitate, which is by-product inorganic compound, was removed by filtration, and the filtrate was poured into 2 L of methanol. The product precipitated was separated by filtration, collected, dried, and then dissolved in 250 mL of tetrahydrofuran. The resulting solution was reprecipitated in 2 L of methanol to obtain a nonionic oligomer a3 represented by the following general formula (G6). The number-average molecular weight was 11,000.

[Chemical Formula 8]

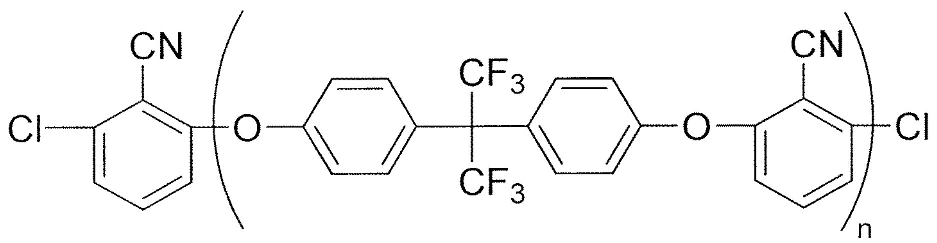

(G6)

[Synthesis Example 7]

(Synthesis of polyether sulfone block copolymer precursor b5' including segment represented by the following chemical formula (G8) and segment represented by the following formula (G9))

Anhydrous nickel chloride in an amount of 1.62 g and 15 mL of dimethyl sulfoxide were mixed, and the mixture was adjusted to 70°C. To the mixture, 2.15 g of 2,2' -bipyridyl was added, and the resulting mixture was stirred at the same temperature for 10 minutes to prepare a nickel-containing solution.

In 5 mL of dimethyl sulfoxide, 1.49 g of (2,2-dimethylpropyl)2,5-dichlorobenzenesulfonate and 0.50 g of SUMIKA EXCEL PES5200P (manufactured by Sumitomo Chemical Company, Limited, Mn = 40,000, Mw = 94,000) represented by the following general formula (G7) were dissolved, 1.23 g of zinc powder was added to the resulting solution, and the resulting mixture was adjusted to 70°C. Into the resulting solution, the nickel-containing solution was poured, and a polymerization reaction was performed at 70°C for 4 hours. The resulting reaction mixture was added to 60 mL of

methanol, then 60 mL of 6 mol/L hydrochloric acid was added to the mixture, and the resulting mixture was stirred for 1 hour. The solid precipitated was separated by filtration, and dried to obtain an off-white polyether sulfone block copolymer precursor b5' including the segments represented by the following chemical formula (G8) and the following general formula (G9) respectively. The weight-average molecular weight was 230,000.

[Chemical Formula 9]

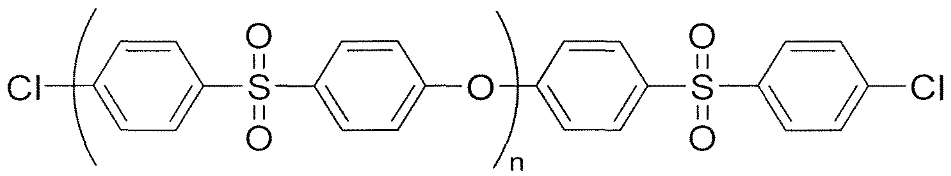

(G7)

[Chemical Formula 10]

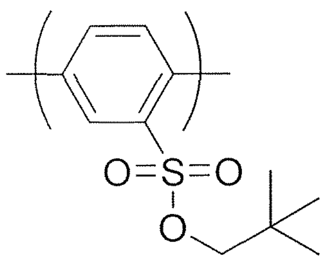

(G8)

[Chemical Formula 11]

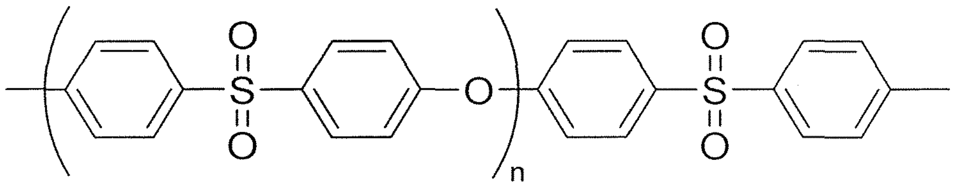

(G9)

[Polymer Electrolyte Solution A]

Polymer electrolyte solution D containing polyether ketone block copolymer b1

Into a 500 mL three-necked flask with a stirrer, a nitrogen introduction tube, and a Dean-Stark trap, 0.56 g (4 mmol) of potassium carbonate (a reagent from Sigma-Aldrich Japan LLC) and 16 g (1 mmol) of the ionic oligomer a2 (having a hydroxyl group end) (the general formula (G4)) obtained in Synthesis Example 4 were introduced. After the flask was purged with nitrogen, 100 mL of *N*-methylpyrrolidone (NMP) and 30 mL of cyclohexane were added, the resulting mixture was dehydrated at 100°C, the temperature was raised to remove cyclohexane, 11 g (1 mmol) of the nonionic oligomer a1 (having a fluoro group end) (the general formula (G3)) obtained in Synthesis Example 3 was added, and the resulting mixture was reacted at 105°C for 24 hours. The resulting product was purified by reprecipitation in a large amount of isopropyl alcohol to obtain a polyether ketone block copolymer b1. This block copolymer had a weight-average molecular weight of 340,000 and an ion exchange capacity (IEC) of 2.1.

A 5 mass% N-methylpyrrolidone (NMP) solution in which the polyether ketone block copolymer b1 obtained was dissolved, that is, a polymerization stock solution was directly centrifuged at a centrifugal force of 20,000 G at 25°C for 30 minutes using an inverter/compact high speed refrigerated centrifuge (model number 6930) manufactured by Kubota Corporation Co., Ltd., with an angle rotor RA-800. The solid matter (cake) sedimented and the supernatant liquid (coating liquid) were neatly separated, and accordingly, the supernatant liquid was collected. Then, the liquid was distilled under reduced pressure at 80°C with stirring, and pressure-filtered using a 1 μm polypropylene filter to obtain a polymer electrolyte solution A.

[Polymer Electrolyte Solution B]

Polymer electrolyte solution D containing polyether ketone block copolymer b2

A polyether ketone block copolymer b2 was synthesized in the same manner as the above-described polyether ketone block copolymer b1 except that the amount of the ionic oligomer a2 obtained in Synthesis Example 4 was changed to 20 g (1.25 mmol). This block copolymer had a weight-average molecular weight of 370,000 and an ion exchange capacity (IEC) of 2.4. In addition, a polymer electrolyte solution B was obtained in the same manner as the polymer electrolyte solution A except that the polyether ketone block copolymer b2 was used in place of the polyether ketone block copolymer b1.

[Polymer Electrolyte Solution C]

Polymer electrolyte solution D containing polyether ketone block copolymer b3

A polyether ketone block copolymer b3 was synthesized in the same manner as the polyether ketone block copolymer b1 except that the amount of the ionic oligomer a2 obtained in Synthesis Example 4 was changed to 25.6 g (1.6 mmol). This block copolymer had a weight-average molecular weight of 390,000 and an ion exchange capacity (IEC) of 2.7. In addition, a polymer electrolyte solution C was obtained in the same manner as the polymer electrolyte solution A except that the polyether ketone block copolymer b3 was used in place of the polyether ketone block copolymer b1.

[Polymer Electrolyte Solution D]

Polymer electrolyte solution containing polyarylene block copolymer represented by the following formula (G10)

To a mixture of 135.0 g (0.336 mol) of neopentyl 3-(2,5-dichlorobenzoyl)benzenesulfonate (the general formula (G5)) synthesized in Synthesis Example 5, 40.7 g (5.6 mmol) of the nonionic-group oligomer a3 (the general formula (G6)) synthesized in Synthesis Example 6, 6.71 g (16.8 mmol) of 2,5-dichloro-4'-(1-imidazolyl)benzophenone, 6.71 g (10.3 mmol) of bis(triphenylphosphine)nickel dichloride, 35.9 g (0.137 mol) of triphenylphosphine, 1.54 g (10.3 mmol) of sodium iodide, and 53.7 g (0.821 mol) of zinc, 540 ml of dried N,N-dimethylacetamide (DMAc) were added under nitrogen.

The reaction system was heated (finally heated to 79°C) with stirring, and allowed to react for 3 hours. An increase in the viscosity of the system was observed during the reaction. The polymerization reaction solution was diluted with 730 mL of DMAc, stirred for 30 minutes, and filtered using Celite as a filter aid.

The filtrate was concentrated with an evaporator, 43.8 g (0.505 mol) of lithium bromide was added to the filtrate, and the resulting mixture was allowed to react at an internal temperature of 110°C for 7 hours in a nitrogen atmosphere. After the reaction, the mixture was cooled to room temperature, poured into 4 L of acetone, and solidified. The product solidified was collected by filtration, air-dried, pulverized with a mixer, and washed with 1,500 mL of 1 N hydrochloric acid with stirring. After filtration, the product was washed with ion-exchanged water until the washing liquid came to have a pH of 5 or more, and then dried at 80°C overnight to obtain a polyarylene block copolymer b4 represented by the following formula (G10). This block copolymer had a weight-average molecular weight of 190,000 and an ion exchange capacity (IEC) of 2.0. The polyarylene block copolymer b4 obtained was dissolved in an organic solvent of *N*-methyl-2-pyrrolidone/methanol at 30/70 (mass%) so that the concentration of the resulting solution could be 0.1 g/g. Thus, a polymer electrolyte solution D was obtained.

[Chemical Formula 12]

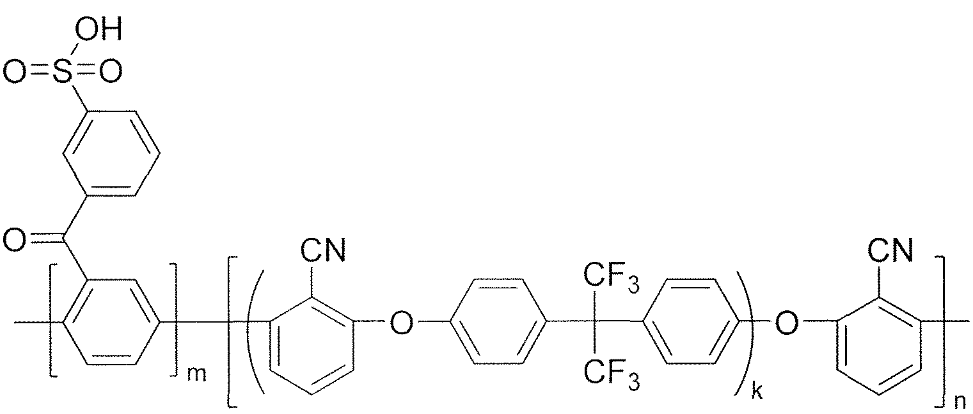

(G10)

[Polymer Electrolyte Solution E]

Polymer electrolyte solution containing polyether sulfone block copolymer b5

The block copolymer precursor b5' obtained in Synthesis Example 7 was weighed out in an amount of 0.23 g, and added to a solution mixture of 0.16 g of lithium bromide monohydrate and 8 mL of NMP, and the resulting mixture was allowed to react at 120°C for 24 hours. The reaction mixture was poured into 80 mL of 6 mol/L hydrochloric acid and stirred for 1 hour. The solid precipitated was separated by filtration. The solid separated was dried to obtain an off-white polyether sulfone block copolymer b5 including a segment represented by the general formula (G9) and a segment represented by the following chemical formula (G11). This block copolymer had a weight-average molecular weight of 190,000 and an ion exchange capacity (IEC) of 2.0. The polyether sulfone block copolymer b5 obtained was dissolved in an organic solvent of*N*-methyl-2-pyrrolidone/methanol at 30/70 (mass%) so that the concentration of the resulting solution could be 0.1 g/g. Thus, a polymer electrolyte solution E was obtained.

[Chemical Formula 13]

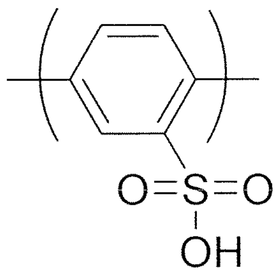

(G11)

[Polymer Electrolyte Solution F]

Polymer electrolyte solution composed of fluorine polymer electrolyte

Dispersion containing a commercially available "Nafion" (registered trademark) at 10 mass% (an Available Acid Capacity 0.92 meq/g product, manufactured by Sigma-Aldrich Japan LLC)

<Production of electrolyte membrane>

Electrolyte membranes A to E were produced by the following procedures.

[Production Example 1]

In the polymer electrolyte solution A, 0.26 g of a polyoxyethylene ether surfactant "FTERGENT" (registered trademark) 208G (manufactured by NEOS Company Limited) was dissolved to prepare a coating liquid. A glass base plate was coated with this coating liquid by flow casting, to which coating liquid a stretched PTFE porous film ("Tetratex" (registered trademark) TX1356, manufactured by Donaldson Company, Inc.) as a porous base material was attached. The film was impregnated sufficiently with the coating liquid, and dried at 100°C for 2 hours. Furthermore, the upper surface of the film dried was coated with the coating liquid by flow casting. The resulting film was dried at 100°C for 2 hours to obtain an electrolyte membrane precursor. Then, this precursor was immersed in an aqueous 10 mass% sulfuric acid solution at 80°C for 24 hours to undergo proton exchange and deprotection reaction, then immersed in a very excessive amount of pure water for 24 hours to be washed sufficiently and dried to obtain an electrolyte membrane A. The total thickness of this electrolyte membrane A was 8 μm. The ratio of the thickness of the composite layer (a layer impregnated with the polymer electrolyte in the porous base material) to the total thickness was approximately 30%.

[Production Example 2]

An electrolyte membrane B was obtained in the same manner as in Production Example 1 except that the polymer electrolyte solution B was used instead of the polymer electrolyte solution A.

[Production Example 3]

An electrolyte membrane C was obtained in the same manner as in Production Example 1 except that the polymer electrolyte solution C was used instead of the polymer electrolyte solution A.

[Production Example 4]

An electrolyte membrane D was obtained in the same manner as in Production Example 1 except that the polymer electrolyte solution D was used instead of the polymer electrolyte solution A.

[Production Example 5]

An electrolyte membrane E was obtained in the same manner as in Production Example 1 except that the polymer electrolyte solution E was used instead of the polymer electrolyte solution E.

[Production Example 6]

A glass base plate was coated with the polymer electrolyte solution E by flow casting, to which solution a stretched PTFE porous film ("Tetratex" (registered trademark) TX1356, manufactured by Donaldson Company, Inc.) was attached. The film was impregnated sufficiently with the coating liquid and dried at 100°C for 2 hours. Furthermore, the upper surface of the film dried was coated with the solution F by flow casting. The resulting film was dried at 100°C for 2 hours to obtain an electrolyte membrane F. The total thickness of this electrolyte membrane F was 15 μm. The ratio of the thickness of the composite layer (a layer impregnated with the polymer electrolyte in the porous base material) to the total thickness was approximately 30%.

<Measurement results of hydrogen permeability and oxygen permeability of electrolyte membrane>

The hydrogen permeability ($TH_{50}$) and oxygen permeability ($TO_{50}$) of each of the electrolyte membranes A to F obtained as described above were measured at 65°C and 50% RH, and the permeability ratio $TR_{50}$ ($TH_{50}/TO_{50}$) was calculated. The results are shown in Table 1.

[Table 1]

| Electrolyte membrane | Hydrogen permeability $TH_{50}$ (mol·cm/(s·cm$^2$·kPa)) | Oxygen permeability $TO_{50}$ (mol·cm/(s·cm$^2$kPa)) | Permeability ratio $TR_{50}$ |
|---|---|---|---|
| A | $2.9\times10^{-14}$ | $2.7\times10^{-15}$ | 10.7 |
| B | $3.3\times10^{-14}$ | $3.6\times10^{-15}$ | 9.1 |
| c | $4.0\times10^{-14}$ | $4.7\times10^{-15}$ | 8.5 |
| D | $6.4\times10\text{-}^{14}$ | 1.8x$10^{-14}$ | 3.6 |
| E | $8.4\times10^{-14}$ | $3.1\times10^{-14}$ | 2.7 |
| F | $1.9\times10^{-3}$ | $7.2\times10^{-14}$ | 2.6 |

The hydrogen permeabilities ($TH_{25}$) and ($TH_{95}$) and oxygen permeabilities ($TO_{25}$) and ($TO_{95}$) of each of the electrolyte membrane A as a representative example of the present invention and the electrolyte membrane F as a representative example of Comparative Examples were measured at 65°C, 25% RH and 95% RH, and the permeability ratios $TR_{25}$ ($TH_{25}/TO_{25}$) and $TR_{95}$ ($TH_{95}/TO_{95}$) were calculated. The results are shown in Table 2.

[Table 2]

| | | Electrolyte membrane A | Electrolyte membrane F |
|---|---|---|---|
| Hydrogen permeability (mol·cm/(s·cm$^2$·kPa)) | $TH_{25}$ | $2.2\times10^{-14}$ | $1.5\times10^{-13}$ |
| | $TH_{50}$ | $2.9\times10^{-14}$ | $1.9\times10^{-13}$ |
| | $TH_{95}$ | $8.4\times 10^{-14}$ | $2.5\times10^{-13}$ |

(continued)

| | | Electrolyte membrane A | Electrolyte membrane F |
|---|---|---|---|
| Oxygen permeability (mol·cm/(s·cm$^2$·kPa)) | $TO_{25}$ | $1.4\times10^{-15}$ | $5.0\times10^{-14}$ |
| | $TO_{50}$ | $2.7\times10^{-15}$ | $7.2\times10^{-14}$ |
| | $TO_{95}$ | $2.1\times10^{-14}$ | $1.1\times10^{-13}$ |
| Permeability ratio | $TR_{25}$ | 15.7 | 3.0 |
| | $TR_{50}$ | 10.7 | 2.6 |
| | $TR_{95}$ | 4.0 | 2.3 |

<Measurement results of water vapor permeability of electrolyte membrane>

The water vapor permeability of each of the electrolyte membranes A to F obtained as described above were measured at 85°C and 55% RH. The results are shown in Table 3

[Table 3]

| Electrolyte membrane | Water vapor permeability (cm$^3$·cm/(cm$^2$·cmHg·s)) |
|---|---|
| A | $2.6\times10^{-6}$ |
| B | $4.3\times10^{-6}$ |
| C | $5.3\times10^{-6}$ |
| D | $8.0\times10^{-6}$ |
| E | $1.6\times10^{-5}$ |
| F | $2.0\times10^{-5}$ |

[First Embodiment]

<Production of catalyst decals 1 to 12>

Ten parts by mass of platinum-supporting carbon particles TEC10V60E (the platinum-supporting ratio, 60 mass%; the average platinum particle size, 2.6 nm; and the BET specific surface area, 90 m$^2$/g) manufactured by Tanaka Kikinzoku Kogyo K. K. and 5 parts by mass of a fluorine polymer electrolyte ("Nafion" (registered trademark) manufactured by The Chemours Company), in terms of a solid content, were dispersed in a solvent mixture (water and 1-propyl alcohol at a ratio of 4:6 by mass), using a bead mill, to prepare a catalyst ink 1 having a solid concentration of 10 mass%. The "I/C" (the ratio of the mass (I) of the polymer electrolyte to the mass (C) of the carbon particles) of this catalyst ink 1 was 1.25. This catalyst ink 1 was applied to a commercially available polytetrafluoroethylene film, and dried to produce a catalyst decal. When the catalyst decal was produced, the solid concentration and/or coating amount of the catalyst ink were/was adjusted in such a manner that the amount of platinum was as described below in the range of from 1 to 20 μm as the thickness of the catalyst layer dried. The catalyst decals 1 to 12 were thus produced.

- Catalyst decal 1: the amount of platinum, 0.9 mg/cm$^2$
- Catalyst decal 2: the amount of platinum, 0.8 mg/cm$^2$
- Catalyst decal 3: the amount of platinum, 0.7 mg/cm$^2$
- Catalyst decal 4: the amount of platinum, 0.6 mg/cm$^2$
- Catalyst decal 5: the amount of platinum, 0.55 mg/cm$^2$
- Catalyst decal 6: the amount of platinum, 0.5 mg/cm$^2$
- Catalyst decal 7: the amount of platinum, 0.4 mg/cm$^2$
- Catalyst decal 8: the amount of platinum, 0.3 mg/cm$^2$
- Catalyst decal 9: the amount of platinum, 0.25 mg/cm$^2$
- Catalyst decal 10: the amount of platinum, 0.2 mg/cm$^2$
- Catalyst decal 11: the amount of platinum, 0.1 mg/cm$^2$
- Catalyst decal 12: the amount of platinum, 0.05 mg/cm$^2$

<Production of catalyst decal 13>

A catalyst ink 2 was prepared in the same manner as the catalyst ink 1 except that the platinum-supporting carbon particles were changed to platinum/cobalt-alloy-supporting carbon particles TEC36F52 (the platinum-supporting ratio, 50 mass%; the average platinum particle size, 4.8 nm; and the BET specific surface area, 340 $m^2/g$) manufactured by Tanaka Kikinzoku Kogyo K. K. The "I/C" of this catalyst ink 2 was 1.0. A catalyst decal 13 was produced in the same manner as the catalyst decals 1 to 12 except that this catalyst ink 2 was used.

- Catalyst decal 13: the amount of platinum, 0.5 $mg/cm^2$

<Production of catalyst decals 14 to 17>

A catalyst ink 3 was prepared in the same manner as the catalyst ink 1 except that the platinum-supporting carbon particles were changed to platinum-supporting carbon particles TEC10F50E-HT (the platinum-supporting ratio, 50 mass%; the average platinum particle size, 4.4 nm; and the BET specific surface area, 360 $m^2/g$) manufactured by Tanaka Kikinzoku Kogyo K. K. The "I/C" of this catalyst ink 3 was 1.0. Catalyst decals 14 to 17 were produced in the same manner as the catalyst decals 1 to 12 except that this catalyst ink 3 was used.

- Catalyst decal 14: the amount of platinum, 0.4 $mg/cm^2$
- Catalyst decal 15: the amount of platinum, 0.3 $mg/cm^2$
- Catalyst decal 16: the amount of platinum, 0.25 $mg/cm^2$
- Catalyst decal 17: the amount of platinum, 0.2 $mg/cm^2$

<Production of catalyst decal 18>

A catalyst ink 4 was prepared in the same manner as the catalyst ink 1 except that the platinum-supporting carbon particles were changed to platinum-supporting carbon particles TEC10F30E-HT (the platinum-supporting ratio, 30 mass%; the average platinum particle size, 3.2 nm; and the BET specific surface area, 550 $m^2/g$) manufactured by Tanaka Kikinzoku Kogyo K. K. The "I/C" of this catalyst ink 4 was 0.71. A catalyst decal 18 was produced in the same manner as the catalyst decals 1 to 12 except that this catalyst ink 4 was used.

- Catalyst decal 18: the amount of platinum, 0.25 $mg/cm^2$

<Production of catalyst decal 19>

A catalyst ink 5 was prepared in the same manner as the catalyst ink 1 except that the platinum-supporting carbon particles were changed to platinum-supporting carbon particles TEC10F50E (the platinum-supporting ratio, 50 mass%; the average platinum particle size, 2.3 nm; and the BET specific surface area, 360 $m^2/g$) manufactured by Tanaka Kikinzoku Kogyo K. K. The "I/C" of this catalyst ink 5 was 1.0. A catalyst decal 19 was produced in the same manner as the catalyst decals 1 to 12 except that this catalyst ink 5 was used.

- Catalyst decal 19: the amount of platinum, 0.25 $mg/cm^2$

<Production of catalyst decal 20>

A catalyst ink 6 was prepared in the same manner as the catalyst ink 1 except that the platinum-supporting carbon particles were changed to platinum-supporting carbon particles TEC10E50E-HT (the platinum-supporting ratio, 50 mass%; the average platinum particle size, 4.3 nm; and the BET specific surface area, 370 $m^2/g$) manufactured by Tanaka Kikinzoku Kogyo K. K. The "I/C" of this catalyst ink 6 was 1.0. A catalyst decal 20 was produced in the same manner as the catalyst decals 1 to 12 except that this catalyst ink 6 was used.

- Catalyst decal 20: the amount of platinum, 0.25 $mg/cm^2$

[Example 1]

The catalyst decal 2 (a cathode catalyst layer) was superposed on one surface of the electrolyte membrane A obtained in Production Example 1, and the catalyst decal 10 (an anode catalyst layer) was superposed on the other surface. The resulting layers were hot-pressed at 150°C at 5 MPa for 3 minutes to be joined with each other. Then, a

polytetrafluoroethylene film was peeled off from each of the catalyst decals to obtain a catalyst coated membrane.

[Examples 2 to 6 and Comparative Examples 1 to 4]

Catalyst coated membranes were obtained in the same manner as in Example 1 except that the kinds of the electrolyte membranes and the kinds of the catalyst decals were changed as shown in Table 4.

[Evaluation of Durability]

The catalyst coated membranes (CCM) obtained in Examples and Comparative Examples above were evaluated under the conditions of [Durability 1] shown in (8) above. The results are shown in Table 4.

[Table 4]

| | CCM | | | | | | | | | Durability 1 | |
|---|---|---|---|---|---|---|---|---|---|---|---|
| | Electrolyte membrane | | Amount of platinum of catalyst layer (mg/cm$^2$) | | | | | | | Evaluation A (μV/Cycle) | Evaluation B (%) |
| | Kind | Permeability ratio | Cathode | | Anode | | CPt/APt | Pt total | | | |
| | | $TR_{50}$ | Catalyst decal | CPt | Catalyst decal | APt | | | | | |
| Example 1 | A | 10.7 | 2 | 0.8 | 10 | 0.2 | 4.0 | 1.0 | | 29 | 30 |
| Example 2 | B | 9.1 | 2 | 0.8 | 10 | 0.2 | 4.0 | 1.0 | | 30 | 28 |
| Example 3 | C | 8.5 | 2 | 0.8 | 10 | 0.2 | 4.0 | 1.0 | | 32 | 26 |
| Example 4 | D | 3.6 | 2 | 0.8 | 10 | 0.2 | 4.0 | 1.0 | | 40 | 20 |
| Comparative Example 1 | E | 2.7 | 2 | 0.8 | 10 | 0.2 | 4.0 | 1.0 | | 52 | 13 |
| Comparative Example 2 | F | 2.6 | 2 | 0.8 | 10 | 0.2 | 4.0 | 1.0 | | 61 | 8 |
| Example 5 | A | 10.7 | 1 | 0.9 | 11 | 0.1 | 9.0 | 1.0 | | 25 | 35 |
| Example 6 | A | 10.7 | 3 | 0.7 | 8 | 0.3 | 2.3 | 1.0 | | 35 | 25 |
| Comparative Example 3 | A | 10.7 | 6 | 0.5 | 6 | 0.5 | 1.0 | 1.0 | | 58 | 13 |
| Comparative Example 4 | A | 10.7 | 4 | 0.6 | 7 | 0.4 | 1.5 | 1.0 | | 56 | 11 |

[Example 7]

<Production of catalyst coated cathode gas diffusion layer>

The catalyst ink used to produce the catalyst decal 2 used in Example 1 was applied to a commercially available gas diffusion layer 24BC manufactured by SGL Carbon AG. The resulting product was dried to obtain a cathode gas diffusion layer in which a catalyst layer containing platinum in an amount of 0.8 mg/cm$^2$ was laminated.

<Production of catalyst coated anode gas diffusion layer>

The catalyst ink used to produce the catalyst decal 10 used in Example 1was applied to a commercially available gas diffusion layer 24BC manufactured by SGL Carbon AG. The resulting product was dried to obtain an anode gas diffusion layer in which a catalyst layer containing platinum in an amount of 0.2 mg/cm$^2$ was laminated.

<Production of membrane electrode assembly (MEA)>

The catalyst coated cathode gas diffusion layer was superposed on one surface of the electrolyte membrane A

obtained in Production Example 1, and the catalyst coated anode gas diffusion layer was superposed on the other surface. The resulting layers were hot-pressed at 160°C at 4.5 Ma for 5 minutes to produce a membrane electrode assembly.

[Evaluation of Durability]

Durability 1 was evaluated in the same manner as in "(8) Evaluation of durability of fuel cell" above except that the membrane electrode assembly was changed to the membrane electrode assembly produced as described above. As a result, the same results as in Example 1 were obtained.

[Example 11]

The catalyst decal 4 (a cathode catalyst layer) was superposed on one surface of the electrolyte membrane A obtained in Production Example 1. and the catalyst decal 11 (an anode catalyst layer) was superposed on the other surface. The resulting layers were hot-pressed at 150°C at 5 MPa for 3 minutes to be joined with each other. Then, a polytetrafluoroethylene film was peeled off from each of the catalyst decals to obtain a catalyst coated membrane.

[Examples 12 to 17 and Comparative Examples 11 to 13]

Catalyst coated membranes were obtained in the same manner as in Example 11 except that the kinds of the electrolyte membranes and the kinds of the catalyst decals were changed as shown in Table 5.

[Evaluation of Durability]

The catalyst coated membranes (CCM) obtained in Examples and Comparative Examples above were evaluated under the conditions of [Durability 1] shown in (8) above. The results are shown in Table 5.

[Table 5]

| | CCM | | | | | | | | | Durability 1 | |
|---|---|---|---|---|---|---|---|---|---|---|---|
| | Electrolyte membrane | | Amount of platinum of catalyst layer (mg/cm$^2$) | | | | | | | Evaluation A (μV/Cycle) | Evaluation B (%) |
| | Kind | Permeability ratio | Cathode | | Anode | | CPt/APt | Pt total | | | |
| | | TR$_{50}$ | Catalyst decal | CPt | Catalyst decal | APt | | | | | |
| Example 11 | A | 10.7 | 4 | 0.6 | 11 | 0.1 | 6.0 | 0.7 | | 26 | 43 |
| Example 12 | B | 9.1 | 4 | 0.6 | 11 | 0.1 | 6.0 | 0.7 | | 28 | 42 |
| Example 13 | c | 8.5 | 4 | 0.6 | 11 | 0.1 | 6.0 | 0.7 | | 31 | 40 |
| Example 14 | D | 3.6 | 4 | 0.6 | 11 | 0.1 | 6.0 | 0.7 | | 38 | 34 |
| Comparative Example 11 | E | 2.7 | 4 | 0.6 | 11 | 0.1 | 6.0 | 0.7 | | 50 | 15 |
| Comparative Example 12 | F | 2.6 | 4 | 0.6 | 11 | 0.1 | 6.0 | 0.7 | | 58 | 11 |
| Example 15 | A | 10.7 | 5 | 0.55 | 12 | 0.05 | 11.0 | 0.6 | | 24 | 47 |
| Example 16 | A | 10.7 | 6 | 0.5 | 10 | 0.2 | 2.5 | 0.7 | | 40 | 35 |
| Comparative Example 13 | A | 10.7 | 7 | 0.4 | 8 | 0.3 | 1.3 | 0.7 | | 60 | 15 |
| Example 17 | A | 10.7 | 13 | 0.5 | 10 | 0.2 | 2.5 | 0.7 | | 42 | 32 |

[Example 21]

The catalyst decal 14 (a cathode catalyst layer) was superposed on one surface of the electrolyte membrane A obtained in Production Example 1, and the catalyst decal 11 (an anode catalyst layer) was superposed on the other

surface. The resulting layers were hot-pressed at 150°C at 5 MPa for 3 minutes to be joined with each other. Then, a polytetrafluoroethylene film was peeled off from each of the catalyst decals to obtain a catalyst coated membrane.

[Examples 22 to 25 and Comparative Examples 21 to 24]

Catalyst coated membranes were obtained in the same manner as in Example 21 except that the kinds of the electrolyte membranes and the kinds of the catalyst decals were changed as shown in Table 6.

[Evaluation of Durability]

The catalyst coated membranes (CCM) obtained in Examples and Comparative Examples above were evaluated under the conditions of [Durability 1] shown in (8) above. The results are shown in Table 6.

[Table 6]

| | CCM | | | | | | | | | Durability 1 | |
|---|---|---|---|---|---|---|---|---|---|---|---|
| | Electrolyte membrane | | Amount of platinum of catalyst layer ($mg/cm^2$) | | | | | | | Evaluation A (μV/Cycle) | Evaluation B (%) |
| | Kind | Permeability ratio | Cathode | | Anode | | CPt/APt | Pt total | | | |
| | | $TR_{50}$ | Catalyst decal | CPt | Catalyst decal | APt | | | | | |
| Example 21 | A | 10.7 | 14 | 0.4 | 11 | 0.1 | 4.0 | 0.5 | | 4 | 56 |
| Example 22 | B | 9.1 | 14 | 0.4 | 11 | 0.1 | 4.0 | 0.5 | | 5 | 54 |
| Example 23 | C | 8.5 | 14 | 0.4 | 11 | 0.1 | 4.0 | 0.5 | | 7 | 52 |
| Example 24 | D | 3.6 | 14 | 0.4 | 11 | 0.1 | 4.0 | 0.5 | | 17 | 45 |
| Comparative Example 21 | E | 2.7 | 14 | 0.4 | 11 | 0.1 | 4.0 | 0.5 | | 25 | 40 |
| Comparative Example 22 | F | 2.6 | 14 | 0.4 | 11 | 0.1 | 4.0 | 0.5 | | 30 | 35 |
| Example 25 | A | 10.7 | 14 | 0.4 | 12 | 0.05 | 8.0 | 0.45 | | 2 | 60 |
| Comparative Example 23 | A | 10.7 | 15 | 0.3 | 10 | 0.2 | 1.5 | 0.5 | | 51 | 50 |
| Comparative Example 24 | A | 10.7 | 16 | 0.25 | 9 | 0.25 | 1.0 | 0.5 | | 80 | 40 |

[Example 31]

The catalyst decal 16 (a cathode catalyst layer) was superposed on one surface of the electrolyte membrane A obtained in Production Example 1, and the catalyst decal 11 (an anode catalyst layer) was superposed on the other surface. The resulting layers were hot-pressed at 150°C at 5 MPa for 3 minutes to be joined with each other. Then, a polytetrafluoroethylene film was peeled off from each of the catalyst decals to obtain a catalyst coated membrane.

[Examples 32 to 38 and Comparative Examples 31 to 34]

Catalyst coated membranes were obtained in the same manner as in Example 31 except that the kinds of the electrolyte membranes and the kinds of the catalyst decals were changed as shown in Table 7.

[Evaluation of Durability]

The catalyst coated membranes (CCM) obtained in Examples and Comparative Examples above were evaluated under the conditions of [Durability 1] shown in (8) above. The results are shown in Table 7. In this regard, in Comparative Example 34, the voltage decreased significantly, and thus, not all the evaluations were possible up to the

5,000th cycle.

[Table 7]

| | CCM | | | | | | | | | Durability 1 | |
|---|---|---|---|---|---|---|---|---|---|---|---|
| | Electrolyte membrane | | Amount of platinum of catalyst layer (mg/cm$^2$) | | | | | | | Evaluation A (μV/Cycle) | Evaluation B (%) |
| | Kind | Permeability ratio | Cathode | | Anode | | CPt/APt | Pt total | | | |
| | | $TR_{50}$ | Catalyst decal | CPt | Catalyst decal | APt | | | | | |
| Example 31 | A | 10.7 | 16 | 0.25 | 11 | 0.1 | 2.5 | 0.35 | | 16 | 65 |
| Example 32 | B | 9.1 | 16 | 0.25 | 11 | 0.1 | 2.5 | 0.35 | | 18 | 65 |
| Example 33 | C | 8.5 | 16 | 0.25 | 11 | 0.1 | 2.5 | 0.35 | | 20 | 62 |
| Example 34 | D | 3.6 | 16 | 0.25 | 11 | 0.1 | 2.5 | 0.35 | | 32 | 50 |
| Comparative Example 31 | E | 2.7 | 16 | 0.25 | 11 | 0.1 | 2.5 | 0.35 | | 45 | 40 |
| Comparative Example 32 | F | 2.6 | 16 | 0.25 | 11 | 0.1 | 2.5 | 0.35 | | 70 | 30 |
| Example 35 | A | 10.7 | 16 | 0.25 | 12 | 0.05 | 5.0 | 0.35 | | 8 | 68 |
| Comparative Example 33 | A | 10.7 | 17 | 0.2 | 10 | 0.2 | 1.0 | 0.4 | | 160 | 30 |
| Example 36 | A | 10.7 | 18 | 0.25 | 11 | 0.1 | 2.5 | 0.35 | | 12 | 68 |
| Example 37 | A | 10.7 | 19 | 0.25 | 11 | 0.1 | 2.5 | 0.35 | | 31 | 38 |
| Example 38 | A | 10.7 | 20 | 0.25 | 11 | 0.1 | 2.5 | 0.35 | | 28 | 64 |
| Comparative Example 34 | F | 2.6 | 19 | 0.25 | 11 | 0.1 | 2.5 | 0.35 | | not evaluable | 10 |

[Example 41 and Comparative Example 41]

Using the catalyst coated membranes (CCM) obtained in Example 1 and Comparative Example 2, the durability was evaluated with the relative humidity controlled at each of 100% RH (durability 1), 50% RH (durability 2), and 0% RH (durability 3) in the fuel cell at the starting and stopping of the cell. The results are shown in Table 8.

[Table 8]

| | CCM | Durability | | | | | |
|---|---|---|---|---|---|---|---|
| | | Evaluation A (μV/Cycle) | | | Evaluation B (%) | | |
| | | Durability 1 | Durability 2 | Durability 3 | Durability 1 | Durability 2 | Durability 3 |
| | | 100%RH | 50%RH | 0%RH | 100%RH | 50%RH | 0%RH |
| Example 41 | Example 1 | 29 | 17 | 6 | 30 | 51 | 70 |
| Comparative Example 41 | Comparative Example 2 | 61 | 44 | 30 | 8 | 18 | 30 |

[Example 51 and Comparative Example 51]

Using the catalyst coated membranes (CCM) obtained in Example 31 and Comparative Example 32, the durability was evaluated with the relative humidity controlled at each of 100% RH (durability 1), 50% RH (durability 2), and 0% RH (durability 3) in the fuel cell at the starting and stopping of the cell. The results are shown in Table 9.

[Table 9]

| | CCM | Durability | | | | | |
|---|---|---|---|---|---|---|---|
| | | Evaluation A (μV/Cycle) | | | Evaluation B (%) | | |
| | | Durability 1 | Durability 2 | Durability 3 | Durability 1 | Durability 2 | Durability 3 |
| | | 100%RH | 50%RH | 0%RH | 100%RH | 50%RH | 0%RH |
| Example 51 | Example 31 | 16 | 7 | 1 | 65 | 72 | 83 |
| Comparative Example 51 | Comparative Example 32 | 70 | 48 | 31 | 30 | 37 | 46 |

[Evaluation of Power Generation Performance]

From Examples 1 to 51 and Comparative Examples 1 to 51 above, the catalyst coated membranes among which the difference (YCa - YAn) between YCa and YAn was different were selected, and the power generation performance was evaluated. The results are shown in Table 10. Herein, YCa and YAn are each the product of: the mass per unit area (D: $mg/cm^2$) of the platinum-supporting carbon particles in the cathode catalyst layer and the anode catalyst layer respectively; and the BET specific surface area (B: $m^2/g$) of the platinum-supporting carbon particles.

[Table10]

| | CCM | | | | | | | | Product of mass (D) of platinum-supporting carbon particles and BET specific surface area (B) | | | | | | | Power generation performance | | |
|---|---|---|---|---|---|---|---|---|---|---|---|---|---|---|---|---|---|---|
| | Electrolyte membrane | | Amount of platinum of catalyst layer ($mg/cm^2$) | | | | | | Cathode | | | Anode | | | YCa-YAn | Voltage(m V) | | Ratio of decrease in voltage (%) |
| | Kind | Permeability ratio | Cathode | | Anode | | CPt/APt | Pt total | D | B | YCa | D | B | YAn | | 1.5A/cm2 | 2.5A/cm2 | |
| | | $TR_{50}$ | Catalyst decal | CPt | Catalyst decal | APt | | | $mg/cm^2$ | $m^2/g$ | D×B | $mg/cm^2$ | | D×B | | | | |
| Example 1 | A | 10.7 | 2 | 0.8 | 10 | 0.2 | 4.0 | 1.0 | 1.33 | 90 | 120 | 0.33 | 90 | 30 | 90 | 666 | 548 | 17.7 |
| Example 5 | A | 10.7 | 1 | 0.9 | 11 | 0.1 | 9.0 | 1.0 | 1.5 | 90 | 135 | 0.17 | 90 | 15 | 120 | 668 | 551 | 17.5 |
| Example 6 | A | 10.7 | 3 | 0.7 | 8 | 0.3 | 2.3 | 1.0 | 1.17 | 90 | 105 | 0.5 | 90 | 45 | 60 | 658 | 538 | 18.2 |
| Comparative Example 3 | A | 10.7 | 6 | 0.5 | 6 | 0.5 | 1.0 | 1.0 | 0.83 | 90 | 75 | 0.83 | 90 | 75 | 0 | 625 | 486 | 22.2 |
| Comparative Example 4 | A | 10.7 | 4 | 0.6 | 7 | 0.4 | 1.5 | 1.0 | 1.0 | 90 | 90 | 0.76 | 90 | 68 | 22 | 630 | 492 | 21.9 |
| Example 11 | A | 10.7 | 4 | 0.6 | 11 | 0.1 | 6.0 | 0.7 | 1.0 | 90 | 90 | 0.17 | 90 | 15 | 75 | 659 | 540 | 18.1 |
| Example 15 | A | 10.7 | 5 | 0.55 | 12 | 0.05 | 11.0 | 0.6 | 0.92 | 90 | 83 | 0.083 | 90 | 7 | 76 | 656 | 541 | 17.5 |
| Example 16 | A | 10.7 | 6 | 0.5 | 10 | 0.2 | 2.5 | 0.7 | 0.83 | 90 | 75 | 0.33 | 90 | 30 | 45 | 642 | 525 | 18.2 |
| Comparative Example 13 | A | 10.7 | 7 | 0.4 | 8 | 0.3 | 1.3 | 0.7 | 0.67 | 90 | 60 | 0.5 | 90 | 45 | 15 | 623 | 497 | 20.2 |
| Example 17 | A | 10.7 | 13 | 0.5 | 10 | 0.2 | 2.5 | 0.7 | 1.0 | 340 | 340 | 0.33 | 90 | 30 | 310 | 682 | 561 | 17.7 |
| Example 21 | A | 10.7 | 14 | 0.4 | 11 | 0.1 | 4.0 | 0.5 | 0.8 | 360 | 288 | 0.17 | 90 | 15 | 273 | 672 | 559 | 16.8 |
| Example 25 | A | 10.7 | 14 | 0.4 | 12 | 0.05 | 8.0 | 0.45 | 0.8 | 360 | 288 | 0.083 | 90 | 7 | 281 | 674 | 563 | 16.5 |
| Comparative Example 23 | A | 10.7 | 15 | 0.3 | 10 | 0.2 | 1.5 | 0.5 | 0.6 | 360 | 216 | 0.33 | 90 | 30 | 186 | 618 | 483 | 21.8 |
| Comparative Example 24 | A | 10.7 | 16 | 0.25 | 9 | 0.25 | 1.0 | 0.5 | 0.5 | 360 | 180 | 0.42 | 90 | 38 | 142 | 614 | 477 | 22.3 |
| Example 31 | A | 10.7 | 16 | 0.25 | 11 | 0.1 | 2.5 | 0.35 | 0.5 | 360 | 180 | 0.17 | 90 | 15 | 165 | 664 | 541 | 18.5 |
| Example 35 | A | 10.7 | 16 | 0.25 | 12 | 0.05 | 5.0 | 0.35 | 0.5 | 360 | 180 | 0.083 | 90 | 7 | 172 | 654 | 549 | 16.1 |

(continued)

| | CCM | | | | | | | | Product of mass (D) of platinum-supporting carbon particles and BET specific surface area (B) | | | | | | | Power generation performance | | |
|---|---|---|---|---|---|---|---|---|---|---|---|---|---|---|---|---|---|---|
| | Electrolyte membrane | | Amount of platinum of catalyst layer ($mg/cm^2$) | | | | | | Cathode | | | Anode | | | YCa-YAn | Voltage(m V) | | Ratio of decrease in voltage (%) |
| | Kind | Permeability ratio | Cathode | | Anode | | CPt/APt | Pt total | D | B | YCa | D | B | YAn | | 1.5A/cm2 | 2.5A/cm2 | |
| | | $TR_{50}$ | Catalyst decal | CPt | Catalyst decal | APt | | | $mg/cm^2$ | $m^2/g$ | D×B | $mg/cm^2$ | | D×B | | | | |
| Comparative Example 33 | A | 10.7 | 17 | 0.2 | 10 | 0.2 | 1.0 | 0.4 | 0.4 | 360 | 144 | 0.33 | 90 | 30 | 114 | 618 | 479 | 22.5 |
| Example 36 | A | 10.7 | 18 | 0.25 | 11 | 0.1 | 2.5 | 0.35 | 0.83 | 550 | 457 | 0.17 | 90 | 15 | 452 | 668 | 549 | 17.8 |

[Second Embodiment]

[Production of Coating Liquid for Anode Catalyst Layer]

<An coating liquid 1>

Ten parts by mass of platinum-supporting carbon particles TEC10EA50E (the platinum-supporting ratio, 50 mass%; the average platinum particle size, 2.4 nm; and the BET specific surface area, 95 $m^2/g$) manufactured by Tanaka Kikinzoku Kogyo K. K. and 4 parts by mass of a fluorine polymer electrolyte, in terms of a solid content, were dispersed in a solvent mixture (water and 1-propyl alcohol at a ratio of 4:6 by mass), using a bead mill, to prepare a coating liquid having a solid concentration of 10 mass%. The "I/C" (the ratio of the mass (I) of the polymer electrolyte to the mass (C) of the carbon particles) of this coating liquid was 0.8.

<An coating liquid 2>

Ten parts by mass of platinum-supporting carbon particles TEC10EA20E (the platinum-supporting ratio, 20 mass%; the average platinum particle size, 2.1 nm; and the BET specific surface area, 110 $m^2/g$) manufactured by Tanaka Kikinzoku Kogyo K. K. and 6.4 parts by mass of a fluorine polymer electrolyte ("Nafion" (registered trademark) manufactured by The Chemours Company), in terms of a solid content, were dispersed in a solvent mixture (water and 1-propyl alcohol at a ratio of 4:6 by mass), using a bead mill, to prepare a coating liquid having a solid concentration of 20 mass%. The "I/C" of this coating liquid was 0.8.

[Production of Cathode Catalyst Decal]

<Catalyst decal 21>

Ten parts by mass of platinum-supporting carbon particles TEC10F50E (the platinum-supporting ratio, 50 mass%; the average platinum particle size, 2.3 nm; and the BET specific surface area, 360 $m^2/g$) manufactured by Tanaka Kikinzoku Kogyo K. K. and 5 parts by mass of a fluorine polymer electrolyte ("Nafion" (registered trademark) manufactured by The Chemours Company), in terms of a solid content, were dispersed in a solvent mixture (water and 1-propyl alcohol at a ratio of 4:6 by mass), using a bead mill, to prepare a catalyst ink having a solid concentration of 12 mass%. The "I/C" of this catalyst ink was 1.0. This catalyst ink was applied to a commercially available polytetrafluoroethylene film so as to have a thickness of 12 $\mu m$ when dried. The resulting film was dried to produce a catalyst decal 21. The amount of platinum of this catalyst decal 21 was 0.4 $mg/cm^2$.

<Catalyst decal 22>

Ten parts by mass of platinum-supporting carbon particles TEC10F55E (the platinum-supporting ratio, 55 mass%; the average platinum particle size, 2.3 nm; and the BET specific surface area, 320 $m^2/g$) manufactured by Tanaka Kikinzoku Kogyo K. K. and 4.5 parts by mass of a fluorine polymer electrolyte ("Nafion" (registered trademark) manufactured by The Chemours Company), in terms of a solid content, were dispersed in a solvent mixture (water and 1-propyl alcohol at a ratio of 4:6 by mass), using a bead mill, to prepare a catalyst ink having a solid concentration of 12 mass%. The "I/C" of this catalyst ink was 1.0. This catalyst ink was applied to a commercially available polytetrafluoroethylene film so as to have a thickness of 10 $\mu m$ when dried. The resulting film was dried to produce a catalyst decal 22. The amount of platinum of this catalyst decal 22 was 0.4 $mg/cm^2$.

<Catalyst decal 23>

Ten parts by mass of platinum-supporting carbon particles TEC10F45E (the platinum-supporting ratio, 45 mass%; the average platinum particle size, 2.3 nm; and the BET specific surface area, 380 $m^2/g$) manufactured by Tanaka Kikinzoku Kogyo K. K. and 5.5 parts by mass of a fluorine polymer electrolyte ("Nafion" (registered trademark) manufactured by The Chemours Company), in terms of a solid content, were dispersed in a solvent mixture (water and 1-propyl alcohol at a ratio of 4:6 by mass), using a bead mill, to prepare a catalyst ink having a solid concentration of 12 mass%. The "I/C" of this catalyst ink was 1.0. This catalyst ink was applied to a commercially available polytetrafluoroethylene film so as to have a thickness of 15 $\mu m$ when dried. The resulting film was dried to produce a catalyst decal 23. The amount of platinum of this catalyst decal 23 was 0.4 $mg/cm^2$.

[Example 61]

The electrolyte membrane A formed on a glass base plate in Production Example 1 was used. The An coating liquid 1 was applied to the opposite surface of this electrolyte membrane A from the glass base plate so as to have a thickness of 1.5 μm when dried. The resulting product was dried at 120°C to have an anode catalyst layer laminated therein. The amount of platinum of this anode catalyst layer was 0.05 $mg/cm^2$. A protecting adhesive film was further laminated on this anode catalyst layer. Next, the electrolyte membrane A having the anode catalyst layer laminated thereon was peeled off from the glass base plate to expose the electrolyte membrane. The surface exposed and the catalyst layer (the amount of platinum, 0.4 $mg/cm^2$) of the catalyst decal 21 were superposed on each other, and hot-pressed at 150°C at 5 MPa for 3 minutes to be joined with each other. Then, the polytetrafluoroethylene film of the catalyst decal 21 and the protecting adhesive film were peeled off to obtain a catalyst coated membrane.

[Examples 62 to 64 and Comparative Examples 61 and 62]

Catalyst coated membranes were produced in the same manner as in Example 61 except that the electrolyte membranes B to F were used in place of the electrolyte membrane A.

[Examples 65 to 67]

Catalyst coated membranes were produced in the same manner as in Example 61 except that the kinds of the catalyst decals and the kinds of the An coating liquids were changed as shown in Table 11.

[Evaluation of Durability]

The catalyst coated membranes (CCM) obtained in Examples and Comparative Examples above were evaluated under the conditions of [Durability 1] shown in (8) above. The results are shown in Table 11.

[Table 11]

| | CCM | | | | | | | Durability 1 | |
|---|---|---|---|---|---|---|---|---|---|
| | Electrolyte membrane | | Cathode catalyst layer | | Anode catalyst layer | | TAn/TCa | Evaluation A (μV/Cycle) | Evaluation B (%) |
| | Kind | Permeability ratio $TR_{50}$ | Catalyst decal | Thickness TCa (μm) | An coating liquid | Thickness TAn (μm) | | | |
| Example 61 | A | 10.7 | 21 | 12 | 1 | 1.5 | 0.13 | 20 | 42 |
| Example 62 | B | 9.1 | 21 | 12 | 1 | 1.5 | 0.13 | 22 | 40 |
| Example 63 | C | 8.5 | 21 | 12 | 1 | 1.5 | 0.13 | 24 | 36 |
| Example 64 | D | 3.6 | 21 | 12 | 1 | 1.5 | 0.13 | 30 | 32 |
| Comparative Example 61 | E | 2.7 | 21 | 12 | 1 | 1.5 | 0.13 | 35 | 30 |
| Comparative Example 62 | F | 2.6 | 21 | 12 | 1 | 1.5 | 0.13 | 38 | 27 |
| Example 65 | A | 10.7 | 21 | 12 | 2 | 4.5 | 0.38 | 23 | 38 |
| Example 66 | A | 10.7 | 22 | 10 | 1 | 1.5 | 0.15 | 25 | 36 |
| Example 67 | A | 10.7 | 23 | 15 | 1 | 1.5 | 0.10 | 17 | 47 |

[Example 71]

The anode catalyst layer was laminated in the same manner as in Example 61 except that the An coating liquid 1 was applied to the electrolyte membrane A so as to have a thickness of 2 $\mu$m when dried. The amount of platinum of this anode catalyst layer was 0.07 mg/cm$^2$. Furthermore, the cathode catalyst layer was laminated in the same manner as in Example 61 to produce a catalyst coated membrane.

[Example 72]

A catalyst coated membrane was produced in the same manner as in Example 71 except that the An coating liquid 1 was applied so as to have a thickness of 4 $\mu$m when dried. The amount of platinum of the anode catalyst layer was 0.15 mg/cm$^2$.

[Comparative Example 71]

A catalyst coated membrane was produced in the same manner as in Example 71 except that the An coating liquid 1 was applied so as to have a thickness of 6 $\mu$m when dried. The amount of platinum of the anode catalyst layer was 0.22 mg/cm$^2$.

[Evaluation of Durability and Power Generation Performance]

The durability 1 and power generation performance of each of the catalyst coated membranes (CCM) obtained in Examples and Comparative Examples above were evaluated. The results are shown in Table 12.

[Table 12]

| | CCM | | | | | | | | | | Durability 1 | | Power generation performance | | |
|---|---|---|---|---|---|---|---|---|---|---|---|---|---|---|---|
| | Electrolyte membrane | | | Cathode catalyst layer | | Anode catalyst layer | | TAn/TCa | TCa/TM | TAn/TM | Evaluation A (μV/Cycle) | Evaluation B (%) | Voltage (mV) | | Ratio of decrease in voltage (%) |
| | Kind | Permeability ratio $TR_{50}$ | Thickness TM (μm) | Catalyst decal | Thickness TCa (μm) | An coating liquid | Thickness TAn (μm) | | | | | | 1.547/ cm2 | 2.5A/ cm2 | |
| Example 71 | A | 10.7 | 8 | 21 | 12 | 1 | 2 | 0.17 | 1.5 | 0.25 | 21 | 41 | 670 | 565 | 15.7 |
| Example 72 | A | 10.7 | 8 | 21 | 12 | 1 | 4 | 0.33 | 1.5 | 0.50 | 30 | 35 | 654 | 540 | 17.4 |
| Comparative Example 71 | A | 10.7 | 8 | 21 | 12 | 1 | 6 | 0.50 | 1.5 | 0.75 | 46 | 20 | 635 | 505 | 20.5 |

[Example 81 and Comparative Example 81]

Using the catalyst coated membranes (CCM) obtained in Example 61 and Comparative Example 62, the durability was evaluated with the relative humidity controlled at each of 100% RH (durability 1), 50% RH (durability 2), and 0% RH (durability 3) in the fuel cell at the starting and stopping of the cell. The results are shown in Table 13.

[Table 13]

| | CCM | Durability | | | | | |
|---|---|---|---|---|---|---|---|
| | | Evaluation A (μV/Cycle) | | | Evaluation B (%) | | |
| | | Durability 1 | Durability 2 | Durability 3 | Durability 1 | Durability 2 | Durability 3 |
| | | 100%RH | 50%RH | 0%RH | 100%RH | 50%RH | 0%RH |
| Example 81 | Example 61 | 20 | 15 | 9 | 42 | 47 | 50 |
| Comparative Example 81 | Comparative Example 62 | 38 | 27 | 20 | 27 | 38 | 42 |

DESCRIPTION OF SYMBOLS

1a: Anode gas diffusion layer
1b: Cathode gas diffusion layer
2a: Anode catalyst layer
2b: Cathode catalyst layer
3: Electrolyte membrane
4: Membrane electrode assembly (MEA)
5a: Anode separator
5b: Cathode separator
6: Hydrogen gas
7: Air or oxygen gas
10: Fuel cell

## Claims

**1.** A catalyst coated membrane comprising: an electrolyte membrane; a cathode catalyst layer arranged on one surface of said electrolyte membrane; and an anode catalyst layer arranged on the other surface of said electrolyte membrane;

wherein said cathode catalyst layer and said anode catalyst layer each contain platinum;
wherein the permeability ratio $TR_{50}$ ($TH_{50}/TO_{50}$) of the hydrogen permeability ($TH_{50}$) to the oxygen permeability ($TO_{50}$) of said electrolyte membrane at 65°C and 50% RH is 3.0 or more; and said catalyst coated membrane satisfies the following condition 1 and/or condition 2:

<condition 1>
the ratio (CPt/APt) of the amount of platinum per unit area (CPt) in said cathode catalyst layer to the amount of platinum per unit area (APt) in said anode catalyst layer is 2.0 or more
<condition 2>
the ratio (TAn/TCa) of the thickness (TAn) of said anode catalyst layer to the thickness (TCa) of said cathode catalyst layer is less than 0.40.

**2.** The catalyst coated membrane according to claim 1, wherein said electrolyte membrane satisfies said condition 1.

**3.** The catalyst coated membrane according to claim 1 or 2, wherein the total of said CPt and said APt is 0.2 mg/cm$^2$ or more and 1.8 mg/cm$^2$ or less.

**4.** The catalyst coated membrane according to any one of claims 1 to 3, wherein the total of said CPt and said APt is more than 0.5 mg/$cm^2$ and 1.8 mg/$cm^2$ or less, and the ratio (CPt/APt) of said CPt to said APt is 3.0 or more and less than 23.0.

**5.** The catalyst coated membrane according to any one of claims 1 to 3, wherein the total of said CPt and said APt is 0.2 mg/$cm^2$ or more and 0.5 mg/$cm^2$ or less, and the ratio (CPt/APt) of said CPt to said APt is 2.0 or more and less than 11.0.

**6.** The catalyst coated membrane according to any one of claims 1 to 5, wherein said (TCa) is 8 $\mu$m or more and less than 20 $\mu$m, and said (TAn) is 0.3 $\mu$m or more and less than 5 $\mu$m.

**7.** The catalyst coated membrane according to any one of claims 1 to 6, wherein the ratio (TAn/TM) of the thickness (TAn) of said anode catalyst layer to the thickness (TM) of said electrolyte membrane is 0.50 or less.

**8.** The catalyst coated membrane according to any one of claims 1 to 7, wherein the ratio (TCa/TM) of the thickness (TCa) of said cathode catalyst layer to the thickness (TM) of said electrolyte membrane is 0.60 or more.

**9.** The catalyst coated membrane according to any one of claims 1 to 8, wherein said cathode catalyst layer and said anode catalyst layer each contain platinum-supporting carbon particles.

**10.** The catalyst coated membrane according to claim 9, wherein the BET specific surface area of said platinum-supporting carbon particles contained in said anode catalyst layer is 250 $m^2$/g or less.

**11.** The catalyst coated membrane according to claim 9 or 10, wherein the product (YCa) of (D) and (B) in said cathode catalyst layer is 70 or more, and the product (YAn) of (D) and (B) in said anode catalyst layer is 50 or less, wherein (D) (mg/$cm^2$) represents the per-unit-area mass of said platinum-supporting carbon particles, and (B) ($m^2$/g) represents the BET specific surface area of said platinum-supporting carbon particles.

**12.** The catalyst coated membrane according to claim 11, wherein the difference (YCa-YAn) between said (YCa) and said (YAn) is 40 or more.

**13.** The catalyst coated membrane according to any one of claims 1 to 12, which satisfies at least one of the following formulae 1 to 3, wherein $TR_{25}$ ($TH_{25}/TO_{25}$) represents the permeability ratio of the hydrogen permeability ($TH_{25}$) to the oxygen permeability ($TO_{25}$) of said electrolyte membrane at 65°C and 25% RH;and $TR_{95}$ ($TH_{95}/TO_{95}$) represents the permeability ratio of the hydrogen permeability ($TH_{95}$) to the oxygen permeability ($TO_{95}$) of said electrolyte membrane at 65°C, 95% RH.

<formula 1> $TR_{25} / TR_{50} \geq 1.2$

<formula 2> $TR_{50} / TR_{95} \geq 1.5$

<formula 3> $TR_{25} / TR_{95} \geq 2.5$

**14.** The catalyst coated membrane according to any one of claims 1 to 13, wherein the water vapor permeability of said electrolyte membrane is $5.0 \times 10^{-7}$ $cm^3 \cdot cm/(cm^2 \cdot cmHg \cdot s)$ or more and $1.5 \times 10^{-5}$ $cm^3 \cdot cm/(cm^2 \cdot cmHg \cdot s)$ or less, as measured and calculated under the following conditions:
<measuring conditions and calculating method for water vapor permeability>
at 55% RH in a cathode and at 0% RH in an anode, the permeation rate ($cm^3$/s) of water at 85°C from said cathode to said anode is measured, and said water vapor permeability is determined from said permeation rate ($cm^3$/s), the thickness (cm) of said electrolyte membrane, a pressure difference (cmHg), and a permeation area ($cm^2$) in accordance with the following calculating formula.

water vapor permeability ($cm^3 \cdot cm/(cm^2 \cdot cmHg \cdot s)$) = {water vapor permeation rate ($cm^3$/s) $\times$ thickness of electrolyte membrane (cm)} / {(gas pressure difference (cmHg) $\times$ permeation area ($cm^2$))}. <calculating formula>

**15.** The catalyst coated membrane according to any one of claims 1 to 14, wherein said electrolyte membrane comprises a hydrocarbon polymer electrolyte.

**16.** The catalyst coated membrane according to claim 15, wherein said hydrocarbon polymer electrolyte comprises an aromatic hydrocarbon polymer.

**17.** The catalyst coated membrane according to claim 16, wherein the aromatic hydrocarbon polymer is a polyether ketone polymer.

**18.** The catalyst coated membrane according to claim 16 or 17, wherein said aromatic hydrocarbon polymer is a block copolymer of an ionic segment and a nonionic segment.

**19.** The catalyst coated membrane according to any one of claims 1 to 18, wherein said electrolyte membrane comprises a porous base material.

**20.** The catalyst coated membrane according to any one of claims 1 to 19, wherein said electrolyte membrane has a polymer electrolyte layer on one surface or both surfaces of a composite layer containing a porous base material and a polymer electrolyte.

**21.** A membrane electrode assembly comprising: said catalyst coated membrane according to any one of claims 1 to 20; and a gas diffusion layer arranged on each of both surfaces of said catalyst coated membrane.

**22.** A fuel cell comprising a plurality of cells each containing said membrane electrode assembly according to claim 21, wherein said plurality of cells are stacked.

**23.** A method of operating said fuel cell according to claim 22, wherein the relative humidity in the cell is controlled so as to be 50% or less at the starting and the stopping of the cell.

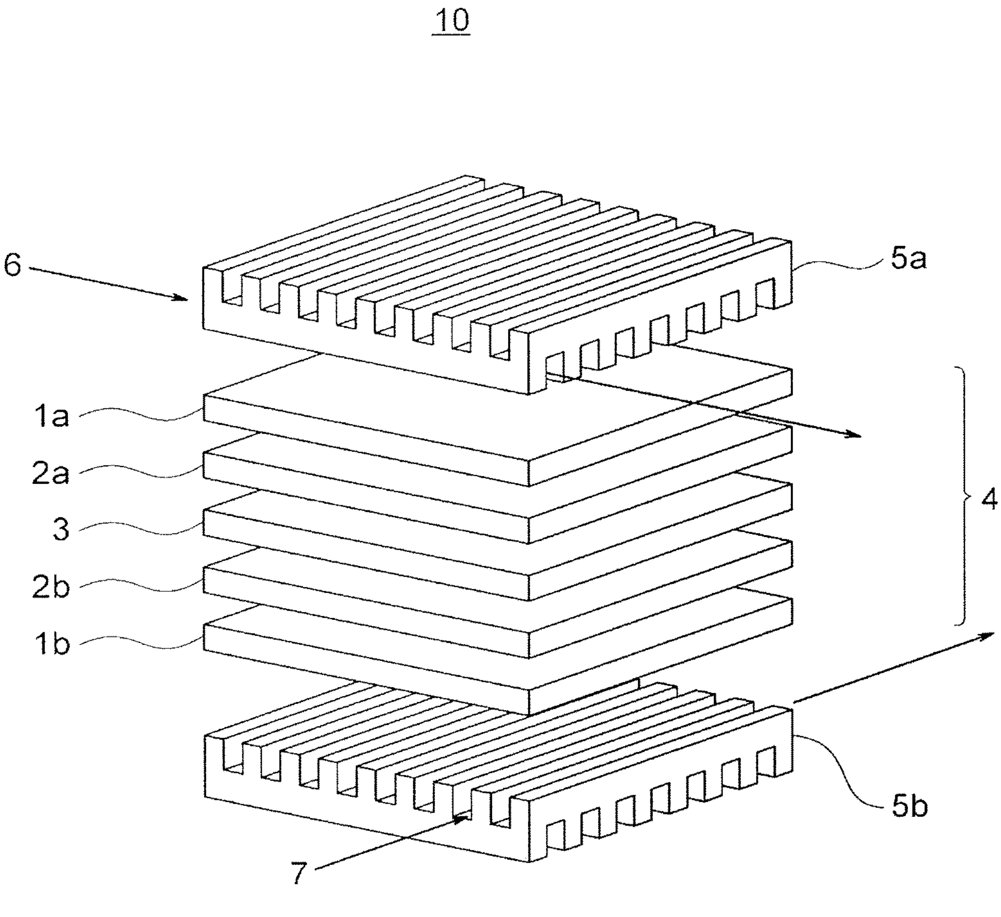


Fig.1

## INTERNATIONAL SEARCH REPORT

International application No. **PCT/JP2023/045415**

**A. CLASSIFICATION OF SUBJECT MATTER**

***H01M 8/1004***(2016.01)i; ***H01M 4/92***(2006.01)i; ***H01M 8/04302***(2016.01)i; ***H01M 8/04303***(2016.01)i; ***H01M 8/04828***(2016.01)i; ***H01M 8/10***(2016.01)i; ***H01M 8/1025***(2016.01)i; ***H01M 8/1058***(2016.01)i; ***H01M 8/1067***(2016.01)i

FI: H01M8/1004; H01M4/92; H01M8/04302; H01M8/04303; H01M8/04828; H01M8/10 101; H01M8/1025; H01M8/1058; H01M8/1067

According to International Patent Classification (IPC) or to both national classification and IPC

**B. FIELDS SEARCHED**

Minimum documentation searched (classification system followed by classification symbols)

H01M8/1004; H01M4/92; H01M8/04302; H01M8/04303; H01M8/04828; H01M8/10; H01M8/1025; H01M8/1058; H01M8/1067

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2021-51994 A (TORAY INDUSTRIES, INC.) 01 April 2021 (2021-04-01) paragraphs [0186], [0187], [0199]-[0202], [0222]-[0226] | 1-23 |
| Y | JP 2006-4916 A (NISSAN MOTOR CO., LTD.) 05 January 2006 (2006-01-05) paragraphs [0011]-[0013], examples | 1-23 |
| Y | JP 2009-21233 A (SUMITOMO CHEMICAL CO., LTD.) 29 January 2009 (2009-01-29) example 1 | 1-23 |
| Y | WO 2008/153153 A1 (SUMITOMO CHEMICAL CO., LTD.) 18 December 2008 (2008-12-18) example 1 | 1-23 |
| A | JP 2005-339991 A (KANEKA CORP.) 08 December 2005 (2005-12-08) | 1-23 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **13 March 2024** | **26 March 2024** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (July 2022)

**INTERNATIONAL SEARCH REPORT**

International application No.
**PCT/JP2023/045415**

**C. DOCUMENTS CONSIDERED TO BE RELEVANT**

| Category* | Citation of document, with indication, where appropriate, of the relevant passages | Relevant to claim No. |
|---|---|---|
| A | JP 2022-142731 A (HYUNDAI MOBIS, CO., LTD.) 30 September 2022 (2022-09-30) | 1-23 |

Form PCT/ISA/210 (second sheet) (July 2022)

**INTERNATIONAL SEARCH REPORT**
**Information on patent family members**

International application No.
**PCT/JP2023/045415**

| Patent document cited in search report | Publication date (day/month/year) | Patent family member(s) | Publication date (day/month/year) |
|---|---|---|---|
| JP 2021-51994 A | 01 April 2021 | (Family: none) | |
| JP 2006-4916 A | 05 January 2006 | (Family: none) | |
| JP 2009-21233 A | 29 January 2009 | US 2010/0190085 A1<br>example 1<br>WO 2008/153151 A1<br>EP 2169748 A1<br>CN 101689640 A<br>KR 10-2010-0028626 A | |
| WO 2008/153153 A1 | 18 December 2008 | US 2010/0167162 A1<br>example 1<br>JP 2009-21234 A<br>EP 2169751 A1<br>CN 101689647 A<br>KR 10-2010-0028625 A | |
| JP 2005-339991 A | 08 December 2005 | (Family: none) | |
| JP 2022-142731 A | 30 September 2022 | US 2022/0302488 A1<br>EP 4060777 A1<br>KR 10-2022-0129397 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009037956 A
- JP 2013243058 A
- JP 2015069926 A
- JP 2015228292 A